(19) Europäisches Patentamt
European Patent Office
Office européen des brevets

(11) **EP 4 745 623 A1**

(12) **EUROPEAN PATENT APPLICATION**
published in accordance with Art. 153(4) EPC

(43) Date of publication:
**20.05.2026 Bulletin 2026/21**

(21) Application number: **23944713.9**

(22) Date of filing: **12.07.2023**

(51) International Patent Classification (IPC):
**G01S 13/02** *(2006.01)*

(52) Cooperative Patent Classification (CPC):
**G01S 13/02**

(86) International application number:
**PCT/CN2023/107097**

(87) International publication number:
**WO 2025/010693 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• XU, Jing
**Dongguan, Guangdong 523860 (CN)**
• LIANG, Bin
**Dongguan, Guangdong 523860 (CN)**
• LIN, Yanan
**Dongguan, Guangdong 523860 (CN)**

(74) Representative: **Novagraaf Technologies**
**2 rue Sarah Bernhardt**
**CS90017**
**92665 Asnières-sur-Seine Cedex (FR)**

(54) **INFORMATION FEEDBACK METHOD AND APPARATUS, INFORMATION ANALYSIS METHOD AND APPARATUS, DEVICE, AND STORAGE MEDIUM**

(57) The present application relates to the technical field of perception, and discloses an information feedback method and apparatus, an information analysis method and apparatus, a device, and a storage medium. The method is executed by a first node, and the method comprises: sending spectrum information, the spectrum information being frequency domain information of a received signal or channel. According to the method, data redundancy of perception feedback is reduced by feeding back spectrum information.

Transmitting spectral information, wherein the spectral information is frequency-domain information of a received signal or channel

210

FIG. 11

EP 4 745 623 A1

**Description**

**TECHNICAL FIELD**

Embodiments of the present disclosure relate to the technical field of communications, and in particular, relate to a method and apparatus for information feedback, a method and apparatus for information analysis, and a device and a storage medium thereof.

**RELATED ART**

Sensing refers to a technology of detecting parameters of a physical environment using electromagnetic waves (including light waves) and/or sound waves to achieve target positioning, action recognition, imaging, and other environmental sensing tasks. For example, in a sensing scenario of target positioning, a sensing node positions a sensing target by receiving a sensing signal.

In some practices, the sensing node acquires sensing information by measuring the sensing signal and reports the sensing information. Typically, the sensing information is in a point-cloud form. The point cloud is a data set of points in a coordinate system. The points include full information measured by the sensing node.

For a specific sensing task, the sensing node reports the point cloud of the sensing information to a sensing processor node, and thus massive information redundancy is present.

**SUMMARY**

Embodiments of the present disclosure provide a method and apparatus for information feedback, a method and apparatus for information analysis, and a device and a storage medium thereof. The technical solutions are as follows.

According to some embodiments of the present disclosure, a method for information feedback is provided. The method is performed by a first node, and includes:

transmitting spectral information, wherein the spectral information is frequency-domain information of a received signal or channel.

According to some embodiments of the present disclosure, a method for information feedback is provided. The method is performed by a second node, and includes:

receiving spectral information, wherein the spectral information is frequency-domain information of a received signal or channel.

According to some embodiments of the present disclosure, a method for information feedback is provided. The method is performed by a second node, and includes:

acquiring sensing information; and
acquiring spectral information by performing spectral analysis on the sensing information, wherein the spectral information includes frequency-domain information of a received signal or channel.

According to some embodiments of the present disclosure, a method for information feedback is provided. The method is performed by a first node, and includes:
transmitting sensing information, wherein the sensing information is used to acquire spectral information, wherein the spectral information includes frequency-domain information of a received signal or channel.

According to some embodiments of the present disclosure, an apparatus for information feedback is provided. The apparatus includes:
a first transmitting module, configured to transmit spectral information, wherein the spectral information is frequency-domain information of a received signal or channel.

According to some embodiments of the present disclosure, an apparatus for information feedback is provided. The apparatus includes:
a second receiving module, configured to receive spectral information, wherein the spectral information is frequency-domain information of a received signal or channel.

According to some embodiments of the present disclosure, an apparatus for information analysis is provided. The apparatus includes:

a third receiving module, configured to acquire sensing information; and
a processing module, configured to acquire spectral information by performing spectral analysis on the sensing information, wherein the spectral information includes frequency-domain information of a received signal or channel.

According to some embodiments of the present disclosure, an apparatus for information analysis is provided. The apparatus includes:

a fourth transmitting module, configured to transmit sensing information, wherein the sensing information is used to acquire spectral information, wherein the spectral information includes frequency-domain information of a received signal or channel.

According to some embodiments of the present disclosure, a sensing device is provided. The sensing device includes a transceiver,

wherein the transceiver is configured to transmit spectral information, wherein the spectral information is frequency-domain information of a received signal or channel.

According to some embodiments of the present disclosure, a sensing device is provided. The sensing device includes a transceiver,

wherein the transceiver is configured to receive spectral information, wherein the spectral information is frequency-domain information of a received signal or channel.

According to some embodiments of the present disclosure, a sensing device is provided. The sensing device includes a transceiver and a processor, wherein

the transceiver is configured to acquire sensing information; and
the processor is configured to acquire spectral information by performing spectral analysis on the sensing information, wherein the spectral information includes frequency-domain information of a received signal or channel.

According to some embodiments of the present disclosure, a sensing device is provided. The sensing device includes a transceiver,

wherein the transceiver is configured to transmit sensing information, wherein the sensing information is used to acquire spectral information, wherein the spectral information includes frequency-domain information of a received signal or channel.

According to some embodiments of the present disclosure, a computer-readable storage medium is provided. The storage medium stores one or more computer programs, wherein the one or more computer programs, when loaded and run by a processor, cause the processor to perform the method for information feedback or the method for information analysis described above.

According to some embodiments of the present disclosure, a chip is provided. The chip includes programmable logic circuitry and/or one or more program instructions, wherein the chip, when running, is caused to perform the method for information feedback or the method for information analysis described above.

According to some embodiments of the present disclosure, a computer program product or a computer program is provided. The computer program product or the computer program includes one or more computer instructions stored in a computer-readable storage medium. The one or more computer instructions, when read from the computer-readable storage medium and executed by a processor, cause the processor to perform the method for information feedback or the method for information analysis described above.

The technical solutions according to the embodiments of the present disclosure achieve the following beneficial effects:

The first node acquires the spectral information based on the received signal or channel. The spectral information is the frequency-domain information, and may greatly represent a motion frequency of the target. Thus, the first node may simplify the received signal or channel including a large amount of information as spectral information. For example, for a breathing sensing task, a breathing frequency (spectral information) is acquired based on the received signal and channel. The first node reports the spectral information, such that an amount of data for sensing feedback is reduced, and an efficiency of the sensing feedback is improved.

**BRIEF DESCRIPTION OF DRAWINGS**

For clearer descriptions of the technical solutions according to the embodiments of the present disclosure, the following briefly introduces the accompanying drawings required for describing the embodiments. Apparently, the accompanying drawings in the following description show merely some embodiments of the present disclosure, and persons of ordinary skill in the art may still derive other drawings from these accompanying drawings without creative efforts.

FIG. 1 is a schematic diagram of different sensing modes according to some embodiments of the present disclosure;
FIG. 2 is a diagram showing a phase of a breathing motion changing over time according to some embodiments of the present disclosure;
FIG. 3 is a spectral diagram of a phase of a breathing motion according to some embodiments of the present disclosure;

FIG. 4 is a diagram showing an echo energy of a sit-up motion changing over time according to some embodiments of the present disclosure;

FIG. 5 is a spectral diagram of an echo energy of a sit-up motion according to some embodiments of the present disclosure;

FIG. 6 is a diagram showing a mixed phase of breathing and heartbeat changing over time according to some embodiments of the present disclosure;

FIG. 7 is a spectral diagram of mixed breathing and heartbeat according to some embodiments of the present disclosure;

FIG. 8 is a diagram showing multi-target phases of breathing changing over time according to some embodiments of the present disclosure;

FIG. 9 is a spectral diagram of multi-target breathing according to some embodiments of the present disclosure;

FIG. 10 is a schematic diagram of a sensing system according to some embodiments of the present disclosure;

FIG. 11 is a flowchart of a method for information feedback according to some embodiments of the present disclosure;

FIG. 12 is a flowchart of a method for information feedback according to some embodiments of the present disclosure;

FIG. 13 is a flowchart of a method for information feedback according to some embodiments of the present disclosure;

FIG. 14 is a flowchart of a method for information analysis according to some embodiments of the present disclosure;

FIG. 15 is a flowchart of a method for information analysis according to some embodiments of the present disclosure;

FIG. 16 is a flowchart of a method for information analysis according to some embodiments of the present disclosure;

FIG. 17 is a block diagram of an apparatus for information feedback according to some other embodiments of the present disclosure;

FIG. 18 is a block diagram of an apparatus for information feedback according to some other embodiments of the present disclosure;

FIG. 19 is a block diagram of an apparatus for information analysis according to some other embodiments of the present disclosure;

FIG. 20 is a block diagram of an apparatus for information analysis according to some other embodiments of the present disclosure; and

FIG. 21 is a schematic structural diagram of a sensing device according to some embodiments of the present disclosure.

## DETAILED DESCRIPTION

For clearer descriptions of the objectives, technical solutions, and advantages of the present disclosure clearer, embodiments of the present disclosure are further described in detail hereinafter with reference to the accompanying drawings.

A network architecture and a service scenario described in the embodiments of the present disclosure are intended to describe the technical solutions according to the embodiments of the present disclosure more clearly, but do not constitute any limitations on the technical solutions according to the embodiments of the present disclosure. Those of ordinary skill in the art may understand that, with evolution of the network architecture and emergence of a new service scenario, the technical solutions according to the embodiments of the present disclosure are also applicable to similar technical problems.

Sensing refers to a technology of detecting parameters of a physical environment using electromagnetic waves (including light waves) and/or sound waves to achieve target positioning, action recognition, imaging, and other environmental sensing tasks. Nodes participating in the sensing include:

- a sensing transmitter node, that is, a transmitter node of the sensing signal;
- a sensing receiver node, that is, a receiver node of the sensing signal;
- a sensing node, wherein the sensing transmitter node and the sensing receiver node are collectively referred to as the sensing node, that is, a node performing the sensing;wherein the sensing node may be an access network device or a terminal;
- a sensing processor node, for processing a sensing result/measurement result/feedback result; wherein the sensing node feeds back the sensing result to the sensing processor node upon performing the sensing, and the sensing processor node may be a terminal, an access network device, a core network device, or a server.
- a sensing manager node, for configuring a sensing process, for example, configuring the sensing signal, or configuring a parameter related to the spectral information; wherein the sensing manager node may be a terminal, an access network device, a core network device, or a server, and the sensing manager node is also referred to as a sensing controller node.

The sensing manager node and the sensing processor node may be the same node or different nodes. The sensing node and the sensing manager node may be the same node or different nodes. The sensing node and the sensing processor node may be the same node or different nodes.

It is expected that a next-generation network (for example, a $6^{th}$ generation of mobile communication technology (6G)) is a fusion of the mobile communication network, a sensing network, and a computing power network. In a narrow sense, the sensing network refers to a system with capabilities such as target positioning (distance measurement, speed measurement, angle measurement), target imaging, target detection, target tracking, and target recognition. In a broad sense, the sensing network refers to a system that includes all services, networks, users, and terminals and has attributes and states of environmental objects.

In terms of sensing applications, the sensing includes:

· outdoor/wide area/local area applications, including smart cities (for example, weather monitoring, and the like), smart transportation/high-speed rail (for example, high-precision map construction, road supervision, intrusion detection, and the like), and low-altitude applications (for example, unmanned aerial vehicle monitoring and obstacle avoidance, flight intrusion detection, flight path management, and the like); and

· indoor/local area applications, including smart home and health management (for example, breathing monitoring, intrusion detection, gesture/pose recognition, motion monitoring, mobile trajectory tracking, and the like), and smart factories (for example, intrusion detection, material detection, item defect detection, and the like).

The following types are merely classifications of sensing applications in some embodiments. The application areas of sensing are not limited to the above examples.

Wireless communication and sensing are two important applications of the modern radio frequency technology. Traditionally, sensing and wireless communication are independent of each other, and this design leads to waste of wireless spectrum and hardware resources. In the beyond fifth generation (B5G) and 6G, the communication spectrum involves millimeter waves, terahertz, and visible light communication, and the spectrum of the future communication may be overlapped with the traditional sensing spectrum. The integrated sensing and communication technology integrates communication and sensing, and may achieve the sensing function using wireless resources, achieve a larger-region sensing task using a widely-deployed cellular network, achieve higher-precision sensing by joint sensing using a station and a plurality of terminals, and achieve the sensing function by reusing hardware modules for wireless communication to reduce the cost. In summary, the integrated sensing and communication technology enables the future wireless communication system to possess the sensing capabilities, and thus provides a foundation for the development of future smart transportation, smart cities, smart factories, unmanned aircraft, and other services.

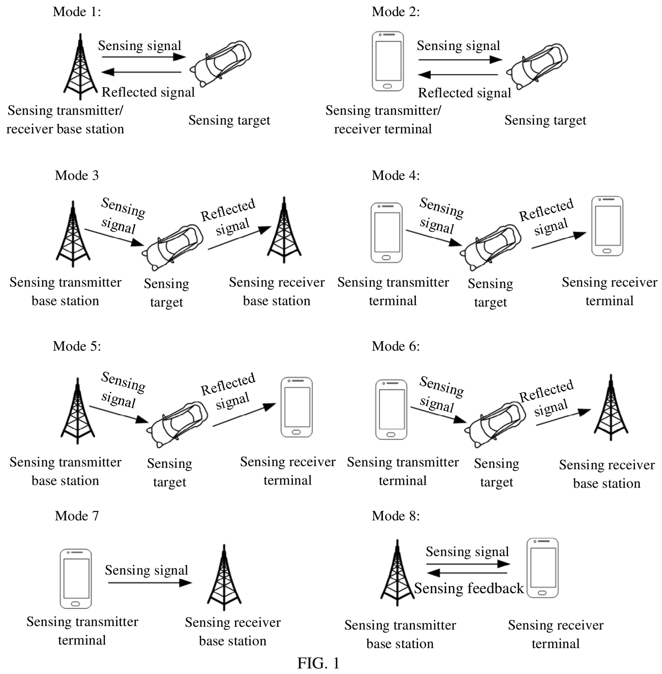

The sensing may be achieved via at least one of the following eight modes. FIG. 1 illustrates the eight sensing modes.

Mode 1: Station self-transmission and self-reception sensing. In this mode, the sensing transmitter node and the sensing receiver node are the same station (the access network device). That is, the station transmits the sensing signal to the sensing target, the sensing signal is reflected by the sensing target, and the sensing signal (that is, the sensing signal reflected by the sensing target) is then received by the same station.

Mode 2: Terminal self-transmission and self-reception sensing. In this mode, the sensing transmitter node and the sensing receiver node are the same terminal. That is, the terminal transmits the sensing signal to the sensing target, the sensing signal is reflected by the sensing target, and the sensing signal is then received by the same terminal.

Mode 3: Station-cooperative sensing. In this mode, the sensing transmitter node and the sensing receiver node are different stations. That is, a station transmits the sensing signal to the sensing target, the sensing signal is reflected by the sensing target, and then the reflected signal is received by another station.

Mode 4: Terminal-cooperative sensing. In this mode, the sensing transmitter node and the sensing receiver node are different terminals. That is, a terminal transmits the sensing signal to the sensing target, the sensing signal is reflected by the sensing target, and then the reflected signal is received by another terminal.

Mode 5: Station-terminal-cooperative sensing. In this mode, the sensing transmitter node is the station, and the sensing receiver node is the terminal. That is, the station transmits the sensing signal to the sensing target, the sensing signal is reflected by the sensing target, and the terminal receives the reflected signal.

Mode 6: Terminal-station cooperative sensing. In this mode, the sensing transmitter node is the terminal, and the sensing receiver node is the station. That is, the terminal transmits the sensing signal to the sensing target, the sensing signal is reflected by the sensing target, and station receives the reflected signal.

Mode 7: The sensing target is the sensing transmitter node. In this mode, the sensing transmitter node is the terminal, and the sensing receiver node is the station. As the sensing target (the terminal) is the sensing transmitter node, the sensing signal is transmitted from the sensing transmitter node (the terminal) to the sensing receiver node (the station) and is not reflected, and the station receives the sensing signal and then directly parses the sensing result.

Mode 8: The sensing target is the sensing receiver node. In this mode the sensing transmitter node is the station, and the sensing receiver node is the terminal. As the sensing target (the terminal) is the sensing receiver node, the terminal needs to feed back the sensing result to the station upon receiving the sensing signal, such that the station knows the sensing result.

Typically, the sensing information is in the point-cloud form. The point cloud is the data set of points in the coordinate system. The points include abundant information, for example, three-dimensional coordinates (X, Y, Z), color, classification values, intensity values, time, and the like.

The point cloud acquired based on laser measurement includes three-dimensional coordinates (X, Y, Z) and a laser reflection intensity. The intensity information is associated with a surface material, a roughness, an incident angle direction of the target, and an emission energy and a laser wavelength of the instrument.

LAS is laser radar data (LiDAR), has a complex storage format, and aims to provide an open format standard that allows different hardware and software providers to output a unified interoperable format. Table 1 is an example of the point cloud in the LAS format. C represents a class, F represents a flight, T represents a GPS time, I represents an echo intensity, R represents a return (that is, a time of the echo), N represents a number of returns (that is, a number of echoes), A represents a scan angle, and RGB represents a red green blue color value (that is, RGB color value).

Table 1

| C | F | T | X | Y | Z | I | R | N | A | R | G | B |
|---|---|---|---|---|---|---|---|---|---|---|---|---|
| 1 | 5 | 405652.3622 | 0 | 5 | 7 | 5.6 | First | 1 | 30 | 180 | 71 | 96 |
| 3 | 5 | 405652.3622 | 8 | 5 | 0 | 2.8 | First | 1 | 30 | 113 | 130 | 122 |
| 3 | 5 | 405653.0426 | 4 | 4 | 3 | 0.2 | First | 2 | -11 | 120 | 137 | 95 |
| 1 | 5 | 405653.0426 | 4 | 1 | 1 | 5.2 | Last | 2 | -11 | 176 | 99 | 110 |

For an explicit sensing task, the sensing processor node only needs to report the sensing results directly related to the sensing task, but does not need to feed back other sensing information. For example, for the breathing sensing, only the breathing frequency needs to be reported, and the echo intensity is not required. Therefore, feedback of all of the point cloud information to the sensing processor node causes a large amount of information redundancy, such that transmission resources are wasted.

For a regular motion pattern, for example, breathing, sit-ups, rope skipping, and the like, a frequency/number of motions is an important indicator. For the type of motion sensing, frequency/number information is generally required.

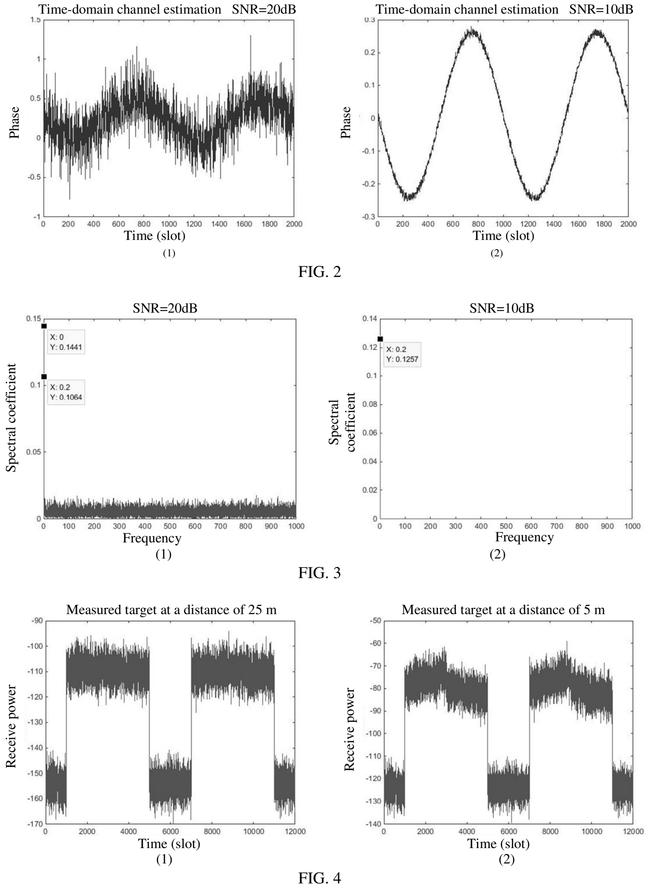

For repetitive motions, the echo signal of the sensing also exhibits periodically. FIG. 2 is a diagram showing a phase of a breathing motion changing over time according to some embodiments of the present disclosure. FIG. 2(1) illustrates a low signal-to-noise ratio (SNR), and FIG. 2(2) illustrates a high SNR. It can be seen from FIG. 2 that echo signal parameters corresponding to the repetitive motion exhibit periodicity. The low-SNR echo signals are affected by noise, and thus it is difficult to find a clear wave value or valley point. For high-SNR echo signals, noise fluctuations are smaller than the echo signal, but the noise spikes may cause a deviation to the selection of the wave peak or valley.

For signals that are periodic in the time domain, frequency information is directly acquired via the frequency-domain analysis. A typical time-frequency transition method is discrete Fourier transform (DFT) or fast Fourier transformation (FFT). That is, $X(n) = \sum_{k=0}^{T-1} x(k)e^{-j2\pi\frac{kn}{T}}$, $n \in 0, 1, \ldots, N$ - 1.

The FFT, that is, $X(n) = \sum_{k=0}^{T-1} \varphi(k)e^{-j2\pi\frac{kn}{T}}$, $n \in 0, 1, \ldots, N$ - 1, is performed on the phase $\varphi$ of the breathing echo, such that $X(n) = a$. a is a spectral coefficient and may be any value. The spectral coefficient is used to represent a value of the frequency component acquired upon time-frequency transition, and the spectral coefficient may be an intensity of the frequency component. FIG. 3 is a spectral diagram of a phase of a breathing motion. The X-axis represents the frequency component, and the Y-axis represents the spectral coefficient. n corresponds to the X-axis, and is the value on the X-axis; and X(n) corresponds to the Y-axis, and is the value on the Y-axis. $\varphi(k)$ represents the phase at the k$^{th}$ time instant in the time domain, and k represents the index of the time-domain variable $\varphi(k)$ and takes a value from a set {0...T-1}. T represents the number of time-domain variables $\varphi$ for FFT, and T is a positive integer greater than 1. n is the index of the frequency-domain variable $X(n)$, and takes a value from a set {0...N-1}. N is a positive integer. FIG. 3(1) is a low SNR, including two main frequency components, that is, n=0 and 0.2, wherein one component is the frequency component of noise, and the other component is the frequency component of breathing. FIG. 3(2) is a high SNR, including a main frequency component, that is, n=0.2, which is the frequency component of breathing. It can be seen from FIG. 3 that the frequency component of breathing is clearly acquired in the low SNR and the high SNR. It can be seen that the frequency components of breathing and noise are separated via the FFT to eliminate the interference of noise to a certain extent.

FIG. 4 is a diagram showing an echo energy of a sit-up motion changing over time. FIG. 4(1) is a schematic diagram of a measured target at a distance of 25 m, which is a measurement at a long distance. The echo energy change in lying-down and siting-up of a person is obvious based on distribution of energy of the received signal. FIG. 4(2) is a schematic diagram of a measured target at a distance of 5 m, which is a measurement at a short distance. The echo energy change in lying-down and siting-up of a person and a receive energy difference in standing-up and lying-down are obvious based on distribution of energy of the received signal. In a case where the measured target stands up, the measured target is closer to the signal receiver node, and the echo energy increases. In a case where the measured target lies down, the measured target is farther from the signal receiver node, and the echo energy decreases.

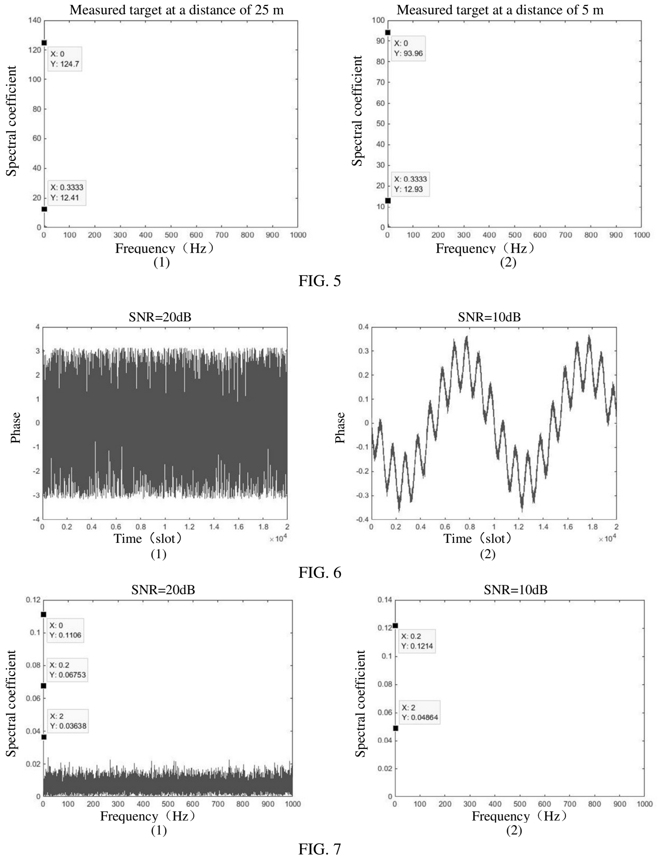

The FFT, that is, $X(n) = \sum_{k=0}^{T-1} P(k)e^{-j2\pi\frac{kn}{T}}, n \in 0,1, ... , N - 1$, is performed on the echo energy P of the sit-up motion, such that $X(n) = a$. FIG. 5 is a spectral diagram of an echo energy of a sit-up motion. The X-axis represents the frequency component, and the Y-axis represents the spectral coefficient. FIG. 5(1) is the frequency spectrum diagram corresponding to the measured target at a distance of 25 m, including two main frequency components, that is, n=0 and 0.33, wherein one component is the frequency component of noise, and the other component is the frequency component of sit-up. FIG. 5(2) is the frequency spectrum diagram corresponding to the measured target at a distance of 5 m, including two main frequency components, that is, n=0 and 0.33, wherein one component is the frequency component of noise, and the other component is the frequency component of sit-up. It can be seen from FIG. 5 that the motion frequency may be accurately acquired via the FFT.

A mixed motion includes measuring a breathing frequency and a heartbeat frequency of a patient. FIG. 6 is a diagram showing a mixed echo phase of breathing and heartbeat changing over time. FIG. 6(1) is a low SNR, and FIG. 6(2) is a high SNR. It can be seen from FIG. 2 that echo signal parameters corresponding to the repetitive motion exhibit periodically. The low SNR echo signals are completely covered by noise. For high SNR echo signals, noise fluctuations are smaller than the echo signal, but the noise spikes may cause deviations in the selection of the wave peak or valley.

The FFT, that is, $X(n) = \sum_{k=0}^{T-1} \varphi(k)e^{-j2\pi\frac{kn}{T}}, n \in 0,1, ... , N - 1$, is performed on the mixed echo phase of breathing and heartbeat, such that $X(n) = a$. FIG. 7 is a spectral diagram of mixed breathing and heartbeat. The X-axis represents the frequency components, and the Y-axis represents the spectral coefficient. n corresponds to the X-axis, being the value on the X-axis; X(n) corresponds to the Y-axis, being the value on the Y-axis. FIG. 7(1) is a low SNR, including three main frequency components, that is, n=0, 0.2, and 2, wherein one component is the frequency component of noise, one component is the frequency component of breathing, and another component is frequency component of heartbeat. FIG. 7(2) is a high SNR, including two main frequency components, that is, n=0.2 and 2, wherein one component is the frequency component of breathing, and another component is frequency component of heartbeat. It can be seen from FIG. 7 that the frequency components of breathing and heartbeat are clearly acquired in the low SNR and the high SNR. It can be seen that the frequency components of breathing, heartbeat, and noise are separated via the FFT to eliminate the interference of noise to a certain extent, and the frequency information of breathing and heartbeat are also separated.

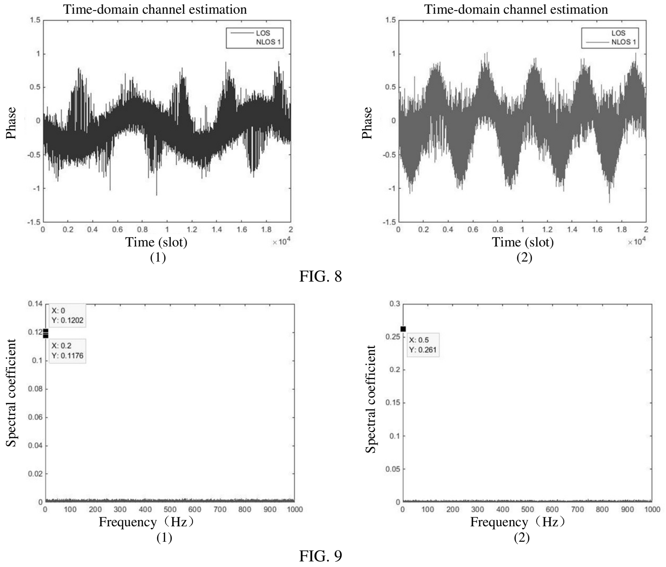

In multi-target case, breathing frequencies of a plurality of patients in a ward are measured. FIG. 8 is a diagram showing echo phases of breathing of a plurality of patients in a ward changing over time. FIG. 8(1) and 8(2) are schematic diagrams of phases of breathing changing with time on two paths. It can be seen from FIG. 8 that the echo phase of breathing on each path changes periodically with time, but much noise spikes are present, and interference between a plurality of path channels are present.

The FFT, that is, $X(n) = \sum_{k=0}^{T-1} \varphi(k)e^{-j2\pi\frac{kn}{T}}, n \in 0,1, ... , N - 1$, is performed on the multi-target echo phases of breathing, such that $X(n) = a$. FIG. 9 is a spectral diagram of multi-target breathing. The X-axis represents the frequency components, and the Y-axis represents the spectral coefficient. n corresponds to the X-axis, being the value on the X-axis; X(n) corresponds to the Y-axis, being the value on the Y-axis. The breathing frequency of each target may be clearly acquired based on the frequency component of the echo signal on each path. FIG. 9(1) includes two main frequency components, that is, n=0 and 0.2, wherein one component is the frequency component of noise, and another component is the frequency component of breathing. FIG. 9(2) includes a main frequency component, that is, n=0.5, wherein the component is the frequency component of breathing.

The present disclosure provides an efficient method for signal analysis or information feedback. The method is applicable to any sensing mode. The sensing transmitter node and the sensing receiver node can be the same node or different nodes.

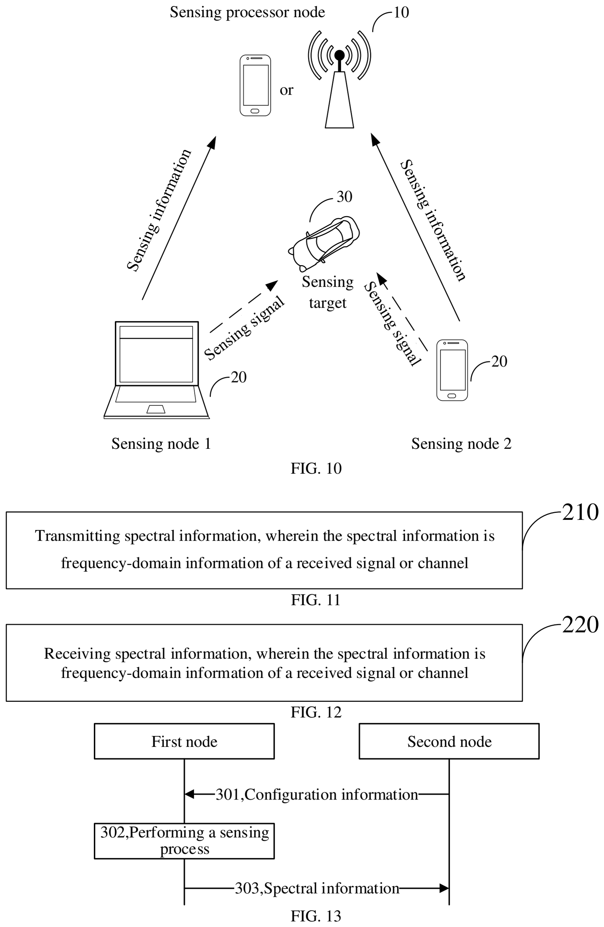

FIG. 10 is a schematic diagram of a sensing system according to some embodiments of the present disclosure. The sensing system includes a sensing processor node 10, a sensing node 20, and a sensing target 30.

The sensing processor node 10 refers to a node that processes the sensing information, a node that receives the sensing result, or a node that initiates the sensing task and needs to acquire the sensing result. In some embodiments, the sensing processor node is a station (an access network device), a terminal, a core network element, or a server. The sensing processor node 10 may play several roles in the sensing system. For example, the sensing processor node 10 is also the sensing manager node. The sensing manager node is a node used to control the sensing process, for example, configuring the sensing process and the sensing information feedback process, or initiating the sensing via the sensing manager node, feeding back the setting information, parsing the sensing feedback transmitted by the sensing node, and the like.

The sensing node 20 includes a sensing transmitter node and a sensing receiver node, and may include stations (access network devices), terminals, Internet of things (IoT) devices, and various handheld devices, in-vehicle devices, wearable devices, computing devices or other processing devices connected to a wireless modem within a wireless communication function, various forms of user equipments (UEs), mobile stations (MSs), and the like. In general, a plurality of sensing nodes 20 are disposed.

The sensing target 30 is a target object that needs to be sensed, including a person, an object, or an environment for sensing. For example, in a case where the sensing application is used to monitor indoor intrusion, the sensing target 30 is an indoor intruder; in a case where the sensing application is used to measure a speed of a vehicle, the sensing target 30 is a target vehicle on the road. The sensing target may also be a target, a distance measurement target, a speed measurement target, a measurement target, or a positioning target.

Upon receiving the sensing task assigned by the sensing manager node, the sensing node 20 senses the sensing target 30 by transmitting or receiving sensing signals. Upon the sensing, the sensing node 20 transmits the sensing information to the sensing processor node 10. In some embodiments, the sensing information is also referred to as sensing measurement information.

FIG. 11 is a flowchart of a method for information feedback according to some embodiments of the present disclosure. The method may be performed by a first node. The first node is the sensing node 20 in the sensing system illustrated in FIG. 10. The method may include the following process.

**In S210,** spectral information is transmitted, wherein the spectral information is frequency-domain information of a received signal or channel.

The first node is the sensing node. In some embodiments, the first node is the sensing receiver node. That is, upon receiving the received signal, the first node performs spectral analysis on the received signal to acquire spectral information, and then transmits the spectral information to the second node. Alternatively, the first node performs channel estimation based on the received signal to acquire the channel, performs spectral analysis on the channel to acquire the spectral information, and then transmits the spectral information to the second node. In some embodiments, the first node acts as the sensing receiver node and the sensing transmitter node. The first node may be any one of the access network device or the terminal. The received signal refers to the sensing signal received by the sensing receiver node.

The second node is the sensing processor node. The sensing processor node needs to acquire the sensing result, or process the sensing information to acquire the sensing result. In some embodiments, the sensing processor node is used to process the sensing result/measurement result/feedback result. In some embodiments, the second node is the sensing processor node 10 in the sensing system illustrated in FIG. 10. The second node may be any one of the access network device, the terminal, the server, or the core network element.

It should be noted that the method is applicable to various sensing modes illustrated in FIG. 1. For example, the sensing transmitter node and the sensing receiver node are the same node or different nodes, and the like.

The sensing refers to a process of acquiring information of a target region, a target environment, or a sensing target using electromagnetic waves (including light waves) and/or sound waves. In some embodiments, the sensing refers to a process of acquiring spatial information using electromagnetic waves (including light waves) and/or sound waves. The space includes at least one of the target region, the target environment, and the sensing target. The sensing target may be a living entity, for example, a human body; or the sensing target may be a non-living entity, for example, a vehicle. In some embodiments, the sensing is a process of acquiring information based on reflection of the sensing signal on the object and the sensing target in the target region and the target environment; or the sensing is a process of acquiring information based on refraction or scattering of the object and the sensing target in the target region and the target environment.

In some embodiments, the "sensing" in the embodiments of the present disclosure may also be replaced by "monitoring," "positioning," "distance measurement," "speed measurement," "angle measurement," "target imaging", "target detection," "target tracking," "target recognition," and the like.

In some embodiments, the first node transmits the spectral information to the second node, and the spectral information includes the frequency-domain information related to the received signal. The spectral information includes the frequency-domain information of the received signal or channel. In some embodiments, the channel is estimated based on the received signal.

In some embodiments, the spectral information includes at least one of:

   f requency-domain information acquired by performing spectral analysis on the received signal at at least one time instant;
   f requency-domain information acquired by performing spectral analysis on the channel at at least one time instant; or
   f requency-domain information acquired by performing spectral analysis on the received signal that is processed at at least one time instant.

The received signal is a signal received by the first node during the sensing process. During the sensing process, the sensing transmitter node transmits the sensing signal, and the sensing signal is propagated to the sensing receiver node via reflection, refraction, scattering in the channel and is then received by the sensing receiver node. Therefore, in the embodiments, the sensing signal transmitted by the sensing transmitter node during the process is referred to as the sensing signal or the transmitted signal of the sensing signal, and the sensing signal received by the sensing receiver node during the process and propagated through the channel is referred to as the received signal or the received signal of the sensing signal. In some embodiments, the received signal includes mixed signals from a plurality of paths, and the signal from each path is acquired upon processing of the received signal.

In some embodiments, the channel is determined based on the received signal. In some modes, the channel is determined by estimating the received signal. In some embodiments, the channel is determined by performing the least squares (LS) estimation on the received signal, that is, dividing the received signal by the transmitted signal; and in some embodiments, the channel is determined by performing the minimum mean square error (MMSE) estimation on the received signal, that is, multiplying the received signal by the MMSE filter. It should be noted that the LS estimation and the MMSE estimation are only two possible implementations, the modes of determining the channel by estimating the received signal are not limited to this, and any estimation mode that can determine the channel information by estimating the received signal should be within the scope of protection. In some modes, an operation is performed between the received signal and the transmitted signal, such that part of channel information is acquired. For example, for frequency-modulated continuous wave signals, the difference in frequency between the received signal and the transmitted signal is acquired, and the acquired frequency difference is positively correlated with the propagation time of the channel. That is, information of the propagation time of the channel is further acquired in the modes. The present disclosure does not limit the form of multiplication and division in the estimation method.

In some embodiments, the first node may acquire the estimated channel by dividing the received signal by the transmitted signal using LS channel estimation. Alternatively, the first node may acquire the estimated channel by multiplying the received signal by the MMSE filter using MMSE.

The processed received signal refers to information acquired upon processing of the received signal. The processing of the received signal may include, for example, denoising the received signal; dividing signals received on different carriers by one another; and dividing signals from different symbols or time slots by one another. It should be noted that the embodiments are only possible implementations of signal processing, the modes of signal processing of the received signal are not limited to this, and any mode that can process the received signal is within the scope of protection.

The channel may be any type of a line-of-sight (LOS) channel, a specified path channel, or an N-path channel. The LOS channel is a channel corresponding to the LOS, the specified path channel is a channel corresponding to the specified path, and the N-path channel includes N channels corresponding to N paths respectively.

The LOS channel refers to the channel over which the wireless signal propagates along a straight path. That is, the signal is not multi-path propagated, and thus is not affected by reflection, refraction, or scattering. In some embodiments, the LOS channel refers to a propagation path along which the sensing signal is transmitted by the sensing transmitter node, without any obstructions, and directly reaches the sensing receiver node. Alternatively, the LOS channel refers to a propagation path along which the sensing signal is reflected by the sensing target, without any obstructions, and directly reaches the sensing signal receiver node. The LOS is determined based on the signal at the receiver or attributes of the channel, for example, the shortest delay, the strongest energy, and the like.

The specified path refers to a path along which the sensing signal propagates or a path with a specific attribute, for example, a path with a second shortest delay.

The N-path channel refers to a channel over which the wireless signal travels a plurality of different propagation paths during the propagation process. A plurality of signals in N paths may have at least one of different delays, amplitudes, and phases in reaching the sensing receiver node. Phases of the N paths may be independent phase information or combined phase information of the N paths.

It should be noted that during the propagation process of the wireless signal, the wireless signal may directly reach the receiver, or may be reflected, refracted, or scattered by the object in the environment and reach the receiver. Therefore, the receiver often receives superposition of a plurality of paths. The plurality of paths are distinguished using some technical means, for example, the time delay difference of the time-domain channels. However, the degree of distinguishment is associated with a structure (for example, a bandwidth) of the transmitted signal and a processing capability of the receiver. In the present disclosure, one of the LOS, the specified path, or the N paths refers to the path that may be distinguished based on the structure of the signal and the processing capability of the receiver. Due to limitation of the structure (for example, a bandwidth) of the transmitted signal and the processing capability of the receiver, the distinguishing capability is limited, and the distinguished path may also include a plurality of physical paths. Therefore, the concept of the path is relative and is defined under some conditions.

In some embodiments, the specified path channel is at least one path channel selected from the N-path channels.

The specified path channel may include the LOS channel. The N-path channel may include the LOS channel and the specified path channel.

In some embodiments, the received signal or channel includes at least one of:

a n amplitude of the received signal or channel;
a phase of the received signal or channel;
a n energy of the received signal or channel; or
a ll parts of the received signal or channel.

In some embodiments, the amplitude further represents a magnitude of energy, and the energy is a square of the amplitude. The all parts of the received signal or channel may include the phase and the amplitude, or may include the phase and the energy, or may include the phase, the amplitude, and the energy.

It should be noted that the amplitude/phase/energy of the received signal is in one-to-one correspondence with the received signal, and the amplitude/phase/energy of the channel is in one-to-one correspondence with the channel (path). That is, one amplitude/phase/energy is set for one received signal/channel (path). In this case, the channel generally refers to a component of the received signal in the time domain or a path of the time-domain channel. The amplitude/phase/energy of the received signal/channel may also be the amplitude/phase/energy of the received signal/channel upon multi-path fusion. In this case, the channel generally refers to the frequency-domain signal or frequency-domain channel.

In general, for minor motions, the amplitude and energy change slightly and are easily covered by noise, and thus the spectral analysis on phase is prioritized in such cases. Sensing targets with the large motion amplitude are subject to phase wrapping, and thus spectral analysis of energy and/or amplitude is prioritized. More complete information may be acquired by performing analysis on complete channels, and thus phase and amplitude/energy are jointly analyzed to achieve a better effect. Thus, in a case where a motion amplitude of a sensing target is less than or equal to a first threshold, the spectral information includes frequency-domain information of the phase of the received signal or channel; or in a case where a motion amplitude of a sensing target is greater than a second threshold, the spectral information includes frequency-domain information of the amplitude of the received signal or channel, or includes frequency-domain information of the energy of the received signal or channel. The first threshold is less than or equal to the second threshold.

In some embodiments, the motion amplitude is determined, evaluated, or characterized based on a motion displacement, or the motion amplitude is determined based on a posture difference of the sensing target during the motion. In some embodiments, for breathing motions, the motion amplitude is determined based on a height of chest rise. Alternatively, for sit-up motions, the motion amplitude is determined based on a rotation angle or displacement of at least one joint point.

In some embodiments, the sensing manager node determines the motion amplitude based on a target motion of the sensing target/sensing task/sensing service/sensing target, and transmits first indication information to the first node in response to a large-amplitude motion to instruct the first node to perform the spectral analysis on the amplitude and/or energy; and transmits second indication information to the first node in response to a minor-amplitude motion to instruct the first node to perform the spectral analysis on the phase.

In some embodiments, the spectral information is the frequency-domain information acquired upon the spectral analysis on the received signal or channel. The spectral information may include at least one of: frequency-domain information of the amplitude of the received signal, frequency-domain information of the phase of the received signal, frequency-domain information of the energy of the received signal, frequency-domain information of the received signal (including the amplitude and the phase), frequency-domain information of the amplitude of the channel, frequency-domain information of the phase of the channel, frequency-domain information of the energy of the channel, frequency-domain information of the channel (including the amplitude and the phase), frequency-domain information of the amplitude of the processed received signal, frequency-domain information of the phase of the processed received signal, frequency-domain information of the energy of the processed received signal, or frequency-domain information of the processed received signal (including the amplitude and the phase).

In some embodiments, the spectral information includes all of frequency-domain information of the received signal and channel, or the spectral information includes part of frequency-domain information of the received signal and channel.

The frequency-domain information includes at least one of:

- a frequency component;
- a spectral coefficient on a frequency component;
- a normalized value of a spectral coefficient; or
- an approximate value of a spectral coefficient.

The spectral information may include all frequency components of the received signal or channel, or only include part of frequency components of the received signal or channel. The spectral information may include all of the frequency components of the received signal or channel and corresponding spectral coefficients of the frequency components, or only include part of the frequency components of the received signal or channel and corresponding spectral coefficients of the part of frequency components of the received signal or channel. The spectral coefficient may be an original value, a normalized value, or an approximate value determined based on an original value from a predetermined set of values.

The spectral information may be information of all or part of frequencies upon time-frequency transition. The reported content may be frequency components, or frequency components and corresponding spectral coefficients, or frequency components and normalized values of corresponding spectral coefficients. For example, for the case in FIG. 3(2), only 0.2 is reported, or a set of {0.2, 0.1257} is reported, or a nearest value determined from a limited set of values is reported. For example, in a case where the set of spectral coefficients is {0.05, 0.1, 0.15, 0.2, 0.25, 0.3, 0.35, 0.4, 0.45, 0.5}, a set of {0.2, 0.1} is reported. In a case where a sensing target includes a plurality of pieces of valid spectral information, one or a plurality of pieces of spectral information need to be reported. For the case in FIG. 7(1), a set of {0.2, 2} is reported, or a set of {0.2, 0.1214} is reported, or a set of {2, 0.04864} is reported, or a method of determining the nearest value from a limited set of values is also applicable to this case.

In some embodiments, the first node reports spectral information of at least one of parameters, that is, the amplitude, the energy, or the phase, of the received signal or channel. The spectral information is the frequency-domain information of the parameters.

In some embodiments, the first node performs the spectral analysis on the received signal or channel to acquire the spectral information. The spectral analysis mainly refers to frequency analysis on the time-domain signal. The frequency information of the time-domain signal is acquired by transitioning the time-domain signal to the frequency domain. Typical time-frequency transition methods include the DFT, the FFT, the Hilbert transformation, and the like.

The spectral information of the received signal or channel is a frequency spectrum acquired by performing frequency analysis on the time-domain signal measured within a spectral information analysis window. That is, the spectral information of the received signal or channel is acquired by transitioning the received signal or channel measured within the spectral information analysis window. In some embodiments, the frequency-domain spectral information is acquired via the FFT. In some embodiments, the frequency-domain spectral information is acquired via the DFT. In some embodiments, the frequency-domain spectral information is acquired via the Hilbert transformation. It should be noted that the method for acquiring the spectral information of the received signal or channel is not limited to the above methods, and any method for transitioning the time-domain signal to the frequency-domain signal to acquire the spectral information of the received signal or channel falls within the scope of protection.

In summary, in the method according to the embodiments, the first node acquires the spectral information based on the received signal or channel. The spectral information is the frequency-domain information, and better represents a motion frequency of the target. Thus, the first node may acquire the spectral information directly related to the sensing task. For example, for the breathing sensing task, the breathing frequency is acquired. The first node reports the spectral information to the sensing processor node, such that the amount of data for sensing feedback is reduced, and the efficiency of the sensing feedback is improved.

FIG. 12 is a flowchart of a method for information feedback according to some embodiments of the present disclosure. The method may be performed by a second node. The second node is the sensing processor node 10 in the sensing system illustrated in FIG. 10. The method may include the following process.

**In S220,** spectral information is received, wherein the spectral information is frequency-domain information of a received signal or channel.

In some embodiments, the second node receives the spectral information reported by the first node. In some embodiments, the second node is the sensing processor node, and is configured to process the sensing information. The first node is the sensing node, and is configured to perform the sensing process and generate the sensing information. The spectral information is the information by performing spectral analysis based on the sensing information by the first node. The spectral information is the frequency-domain information of the received signal or channel.

In some embodiments, the spectral information is acquired as follows:

1) Spectral information corresponding to the amplitude/energy/phase/channel (including the amplitude and the phase) of the path at M time instants.

That is, the spectral information is acquired based on M channels in a path. M is a positive integer.

In some embodiments, the first node receives M received signals at the M time instant and measures the M received signals. Each of the received signals includes a signal from the path. The first node performs channel estimation based on each of the received signals, and acquires M channels corresponding to each of the M time instants.

2) Spectral information corresponding to amplitudes/energies/phases/channels (including the amplitudes and the phases) of N paths at M time instants. The spectral information of each path is separately processed, or jointly processed.

The spectral information is acquired based on M channels in each of N paths. M is a positive integer, and N is an integer greater than 1. In some embodiments, the spectral information is acquired by separately processing each of the N paths; or the spectral information is acquired by jointly processing different paths in the N paths.

In some embodiments, the first node acquires a received signal upon receiving the sensing signal at a time instant, and the received signal may include signals from a plurality of paths. A channel corresponding to each of the plurality of paths and a mixed channel corresponding to the plurality of paths may be acquired by performing channel estimation on the received signal. The path refers to a transmission path of the sensing signal. After the sensing transmitter node transmits the sensing signal, the sensing signal may reach the sensing receiver node via the plurality of paths. The received signal acquired by receiving the sensing signal by the sensing receiver node at a time instant may include signals from the plurality of paths. The sensing receiver node may separate the received signals from the plurality of paths, and acquire the signal corresponding to each of the paths. A channel corresponding to each of the paths is acquired by performing channel estimation on the signal from each of the paths. The channel may refer to a channel estimation result acquired based on the received signal.

In some embodiments, the first node receives M received signals at the M time instants and measures the M received signals. Each of the received signals includes signals from N paths. The first node performs channel estimation based on the signal from each of the paths, and acquires N channels. That is, the first node may acquire M*N channels.

In some embodiments, the first node performs the spectral analysis on at least one of the following parameters of the channel, that is, the amplitude, the phase, or the energy, such that the spectral information is acquired. Then, the first node performs the spectral analysis on M*N*x pieces of data. x is equal to a number of parameters of the channel. For example, in a case where the parameters include the amplitude, the phase, and the energy, x is equal to 3.

For example, the first node performs the spectral analysis on phases of the M*N channels measured at the M time instants to acquire the spectral information, the first node performs the spectral analysis on amplitudes of the M*N channels measured at the M time instants to acquire the spectral information, the first node performs the spectral analysis on energies of the M*N channels measured at the M time instants to acquire the spectral information, the first node performs the spectral analysis on phases and amplitudes of the M*N channels measured at the M time instants to acquire the spectral information, the first node performs the spectral analysis on phases and energies of the M*N channels measured at the M time instants to acquire the spectral information, the first node performs the spectral analysis on amplitudes and energies of the M*N channels measured at the M time instants to acquire the spectral information, or the first node performs the spectral analysis on phases, amplitudes, and energies of the M*N channels measured at the M time instants to acquire the spectral information.

The first node may perform the spectral analysis on combined M*N channels to acquire the spectral information.

The first node may perform the spectral analysis on each channel in each of the N paths to acquire the spectral information corresponding to the path. The spectral information includes N sets of frequency-domain information corresponding to the N paths, and a set of frequency-domain information is acquired by performing the spectral analysis on M channels in a path.

In some embodiments, M refers to M measurement time instants. The M channels are in one-to-one correspondence with M time instants. It should also be understood that the M channels are measured successively at the M time instants.

M is determined by the communication protocol; or M is determined based on the configuration information; or M is determined based on the sensing service. In some embodiments, M is specific to a sensing service, a sensing task, sensing receiver nodes, or sensing transmitter nodes. The first node is one of the sensing receiver nodes, and the sensing transmitter nodes are the same or different from the sensing receiver nodes.

The sensing service and the sensing task may have the same or different meanings. In a case where the sensing service and the sensing task have different meanings, a sensing service includes a plurality of sensing tasks. The sensing service/sensing task may only sense one or a plurality of parameters. The parameter includes at least one of a speed, a delay, a distance, or an energy.

M may be configured by the sensing manager node or the sensing processor node. M is defined based on any one of the following configurations.

1) **Direct configuration:** M is determined based on first configuration information. The first configuration information is used to configure a spectral information analysis window of the spectral information. The spectral information analysis window is a time window for analyzing the received signal or channel, and the first node selects M received signals or channels at M different time instants within the spectral information analysis window for spectral analysis.

The first configuration information includes at least one of:

a start time of the spectral information analysis window;
a duration of the spectral information analysis window;
a n end time of the spectral information analysis window;
a period of the spectral information analysis window; or
a time interval between adjacent time instants in M time instants.

In some embodiments, the spectral information analysis window is repetitive, and thus the period of the spectral information analysis window is a repetitive period of the spectral information analysis window. In some embodiments, the M time instants are evenly spaced apart from each other, and thus a time interval in the first configuration information refers to the time interval between any two adjacent time instants in the M time instants. In some embodiments, the M time instants are unevenly spaced apart from each other. In this case, a time interval in the first configuration information includes a time interval corresponding to each two adjacent time instants in the M time instants, i.e., (M-1) time intervals totally.

That is, time positions of the M time instants are configured. For example, the start times (offsets), the durations, and the time interval between adjacent times within the time window of the M time instants are configured.

For example, the first node receives the first configuration information from the sensing manager node or the sensing processor node. The first configuration information includes the start time, the duration, and the time interval of the spectral information analysis window. For example, the start time is the first symbol, the duration is 10 symbols, and the time interval between adjacent time instants is two symbols. Then, M is equal to 4, and the M time instants are the first symbol, the $4^{th}$ symbol, the $7^{th}$ symbol, and the $10^{th}$ symbol. The first node performs the spectral analysis on the received signal or channel received at the first symbol, the $4^{th}$ symbol, the $7^{th}$ symbol, and the $10^{th}$ symbol to acquire the spectral information.

**2) Indirect configuration:** M is determined based on second configuration information. The second configuration information is used to configure a transmission time of a sensing signal, and the sensing signal is an initial signal corresponding to the received signal.

The second configuration information includes at least one of: a start time for transmission of the sensing signal, a duration for transmission of the sensing signal, an end time for transmission of the sensing signal, or a period or time interval for transmission of the sensing signal,.

That is, the M time instants are indirectly acquired based on configuration of other parameters. For example, the transmission time of the sensing signal within a period includes the start symbol/slot S, the time-domain interval T, and the duration D within the period.

For example, the first node receives the second configuration information from the sensing manager node or the sensing transmitter node. The second configuration information includes the start time and the time interval of the sensing signal within a period. For example, the period of the sensing signal is 10 symbols, the start time of the sensing signal within the period is the first symbol, and the time interval is four symbols. Then, M is equal to 2, and the M time instants are the first symbol and the $5^{th}$ symbol.

**3) Combined configuration:** M is determined based on the first configuration information and the second configuration information.

That is, part of parameters are determined based on the configuration information of the spectral information analysis window, and part of parameters are determined based on other parameters. The other parameters may be used to indicate the time-domain position of the sensing signal within the spectral information analysis window, for example, the start symbol and the time interval/period. For example, M is determined based on the configuration information of the sensing signal, the time-domain start symbol S, the transmission time interval/period T, and the transmission times within the W-sized window starting from the start symbol S. The M time instants may also be M sensing signal transmission time instants within the W-sized window starting from a symbol n, and the symbol/slot n generally depends on a sensing information report time. For example, an end position of the window W is m symbols/frames before the sensing information report time instant K, and the symbol/slot n is determined based on the dimension of W.

In some embodiments, M is a number of time-domain signals for spectral analysis, and the dimension of the spectral information analysis window is determined based on M. M is correlated with a motion period of the sensing target, and a time duration corresponding to M is generally greater than or equal to the motion period of the sensing target. The time duration corresponding to M is greater than or equal to a motion period of a sensing target, and/or the time duration corresponding to M is greater than or equal to a channel change period of a sensing target.

The time duration corresponding to M is a window length of the spectral information analysis window. The time duration is equal to a product of M and the time interval between adjacent times, a product of (M-1) and the time interval between adjacent time instants, a product of M and the period, or a product of (M-1) and the period.

For example, the typical frequency of breathing is 0.2 Hz, and the period is 5s. Then the time duration corresponding to M may be set to 5s, or a value greater than 5s, such as 8s or 10s. In the case where the motion period of the sensing target is undetermined, but a valid period range is present, M needs to cover all cases within the valid period range. For example, in a case where the valid range for the breathing frequency is from 0.1 to 0.5 Hz, and the period ranges from 2 to 10s, M may be set to 10s, or a value greater than 10s, such as 15s.

In some embodiments, the time in the first configuration information and the second configuration information are absolute times, for example, seconds or milliseconds. In some embodiments, the times in the first configuration information and the second configuration information are relative times, for example, a number of slots, a number of symbols, or a number of frames.

In some embodiments, in a case where the spectral information is acquired based on M channels in each of N paths, (N-X) channels in N channels corresponding to the first time instant are default values (for example, 0) in a case where a number X of channels measured in a first time instant in the M time instants is less than N. X is a positive integer. The first time instant is any time instant in the M time instants.

Alternatively, in a case where a number X of channels measured in a first time instant in the M time instants is greater than N, N channels corresponding to the first time instant are N channels selected from X channels.

In some embodiments, in a case where the number X of channels is greater than N, the N channels are at least one type of: channels corresponding to N paths with a strongest energy in the X channels, or channels corresponding to N paths with a shortest delay in the X channels.

The N paths with the strongest energy may include N paths with the strongest energy and the same energy, or first N paths in a descending order of energies. The N paths with the shortest delay may be N paths with the shortest delay and the same delay, or first N paths in a descending order of delays.

In some embodiments, in a case where the N paths have the strongest energy and the same energy, the N paths are selected from the X channels, or the X channels are ranked in a descending order of energies of the paths and first N channels are selected. That is, the N channels are N paths in a descending order of energies of the paths.

In some embodiments, in a case where the N paths have the shortest delay and the same delay, the N paths are selected from the X channels, or the X channels are ranked in a descending order of delays of the paths and first N channels are selected. That is, the N channels are N paths in a descending order of delays of the paths.

In some embodiments, in a case where the sensing is multi-target sensing, the spectral information is reported in an order. For example, the spectral information is successively reported in an order of intensities of the received signals or an order of the delays. For example, in FIG. 9, corresponding frequencies in an ascending order are {0.2, 0.5} based on the delay of the signal.

In a case where at least two sensing targets are present, the spectral information of the at least two of sensing targets is reported based on an order of first parameters. Each of the first parameters includes at least one of: an intensity of the received signal, a delay of the received signal, or a geographic location grid corresponding to the received signal.

The geographic location grid corresponding to the received signal is used to indicate a geographic location where a reflection point of the received signal is located.

In some embodiments, the first node may filter out valid spectral information and then report the valid spectral information based on the reported report constraints (for example, at least one of a valid range for the spectral information, a decision threshold (a dimension of the frequency component) for the spectral information, and a reported amount of spectral information) to make the reported spectral information to be closer to a requirement of the sensing task/sensing service. The constraint may be configured or defined by a protocol. For example, for FIG. 3(1), although the acquired spectral information is 0 and 0.2, the valid range for breathing is from 0.1 to 0.5 Hz, such that the first node only reports 0.2.

In some embodiments, the spectral information is determined based on a report constraint. The report constraint includes at least one of: a valid range for the spectral information, a decision threshold for the spectral information, or a reported amount of the spectral information.

The valid range for the spectral information includes at least one of a valid range for the frequency component, or a valid range for the spectral coefficient. The valid range for the frequency component or the valid range for the spectral coefficient is determined based on a regular motion period for the sensing task/sensing service/sensing target.

Similarly, the decision threshold for the spectral information includes at least one of a decision threshold for the frequency component or a decision threshold for the spectral coefficient. The decision threshold for the frequency component or the decision threshold for the spectral coefficient is determined based on a regular motion period for the sensing task/sensing service/sensing target.

In some embodiments, the first node filters out the spectral information within the valid range, and/or, the spectral information that satisfies the decision threshold, and/or, the spectral information at a number (the reported amount) based on the report constraint.

In summary, in the method according to the embodiments, the first node acquires the spectral information based on the received signal or channel. The spectral information is the frequency-domain information, and may greatly represent a motion frequency of the target. Thus, the first node may acquire the spectral information directly related to the sensing task. For example, for the breathing sensing task, the breathing frequency is acquired. The first node reports the spectral information to the sensing processor node, such that the amount of data for sensing feedback is reduced, and the efficiency of the sensing feedback is improved.

FIG. 13 is a flowchart of a method for information feedback according to some embodiments of the present disclosure. The method may be performed by a first node and a second node. The first node is the sensing node 20 in the sensing system illustrated in FIG. 10, and the second node is the sensing processor node 10 in the sensing system illustrated in FIG. 10. The method may include the following processes.

**In S301,** the second node configures configuration information of sensing for the first node.

In some embodiments, the second node further acts as a sensing manager node. That is, the second node acts as the sensing manager node and the sensing processor node. The configuration information of sensing includes at least one of: the first configuration information of the sensing signal, the second configuration information of the spectral information analysis window, the configuration information of the report constraint of the spectral information, or the configuration information of the sensing task.

In some embodiments, the first node receives the first configuration information of the sensing signal. The first configuration information of the sensing signal includes at least one of: time-domain information of the sensing signal, frequency-domain information of the sensing signal, or sequence information of the sensing signal. The time-domain information of the sensing signal includes at least one of a period, a period offset, a symbol offset, a start time, a time interval, a duration, or an end time. The frequency-domain information of the sensing signal includes at least one of a start resource block (RB), a signal bandwidth, or a sequence cluster. The sequence information of the sensing signal include a sequence initialization seed. The sequence initialization seed is used to determine the sequence of the sensing signal.

In some embodiments, the first node further receives the second configuration information of the spectral information analysis window. The second configuration information includes at least one of: a start time for transmission of the sensing signal, a duration for transmission of the sensing signal, an end time for transmission of the sensing signal, or a period or time interval for transmission of the sensing signal.

In some embodiments, the first node further receives the configuration information of the report constraint of the spectral information.

In some embodiments, the first node further receives the configuration information of the sensing task. The configuration information of the sensing task is used to indicate configuration of the sensing task, sensing service, sensing reporting, and the like.

**In S302,** the first node performs a sensing process.

The first node measures the received signal to acquire the received signal or channel. The first node receives the sensing signal prior to reporting the spectral information.

In some embodiments, the sensing transmitter node transmits the sensing signal. The sensing receiver node receives the sensing signal based on the configuration information of the sensing signal or the measurement configuration of the sensing signal to acquire the received signal. The sensing transmitter node and the sensing receiver node may be the same node or different nodes. The first node is one of the sensing receiver nodes.

In some embodiments, the first node can process the received signal. For example, the first node performs channel estimation based on the received signal to acquire the channel. For example, the first node performs spectral analysis on the received signal or channel to acquire the spectral information.

**In S303,** the first node transmits the spectral information to the second node.

In some embodiments, the first node reports a validity or reliability of the spectral information. The validity or reliability is represented by at least one of: a signal-to-interference-plus-noise ratio (SINR), a reliability probability, or an LOS probability.

In some embodiments, the LOS probability refers to the probability that a path corresponding to the spectral information is an LOS. The higher the LOS probability, the more reliable the spectral information. The reliability probability refers to a probability determined based on the SINR or LOS. For example, in a case where the SINR is greater than 20 dB, the reliability probability is 99%.

For example, in FIG. 3(1), the first node not only reports the spectral information but also reports that the SINR is equal to -20 dB. In FIG. 3 (2), the first node not only reports the spectral information but also reports that the SINR is equal to 10 dB.

V The validity or reliability is reported in the same message as the spectral information or in different messages from the spectral information.

In some embodiments, the first node further transmits the report constraint. The first node may filter out valid spectral information and then report the valid spectral information based on report constraints, for example, at least one of a valid range for the spectral information, a decision threshold (a dimension of the frequency component) of the spectral information, and a reported number of spectral information. The constraint may be configured or defined by a protocol. For example, for the left diagram in FIG. 2, although the acquired spectral information is 0 and 0.2 Hz, the valid range for breathing is from 0.1 to 0.5 Hz, such that the first node only reports 0.2.

For example, for the breathing sensing task, as the valid range for breathing is from 0.1 to 0.5 Hz, the report constraint is set to that the valid range for the frequency component in the spectral information is from 0.1 to 0.5 Hz. In a case where the frequency components in the spectral information acquired by the first node based on the received signal include 0 Hz, 0.2 Hz, 0.8 Hz, 0.2 Hz is selected from 0 Hz, 0.2 Hz, 0.8 Hz based on the valid range from 0.1 to 0.5 Hz, and thus the spectral information that needs to be reported by the first node includes the frequency component 0.2 Hz, and the other frequency components 0 Hz and 0.8 Hz do not need to be reported.

For example, for the breathing perception task, only the breathing frequency needs to be acquired, and the breathing frequency cannot be 0. Then the report constraint is set to that the reported amount is 1 and the decision threshold for the frequency component is greater than 0. In a case where the frequency components in the spectral information acquired by the first node based on the received signal include 0 Hz, 0.2 Hz, 0.8 Hz, and the spectral coefficients corresponding to the frequency components are 3, 2, 0.1, the first node selects the frequency component (that is, 0.2 Hz) that satisfies the decision threshold and has the largest spectral coefficient from the frequency components based on the report constraint, and thus the spectral information that needs to be reported by the first node includes the frequency component 0.2 Hz, and the other frequency components 0 Hz and 0.8 Hz are considered as noise and do not need to be reported.

In the embodiment of the present disclosure, S301, S302, and S303 may be implemented as independent embodiments. S301 may be implemented as an independent embodiment, S302 may be implemented as an independent embodiment, and S303 may be implemented as an independent embodiment. Alternatively, S302 and S303 may be implemented as an independent embodiment. Alternatively, S301 and S302 may be implemented as an independent embodiment.

In summary, in the method according to the embodiments, the spectral analysis on the channel parameter effectively reflects the motion frequency of the sensing target and separates the motions at different frequencies for independent or joint analysis. For the low SNR case, the frequency components of the motion are extracted. For the multi-path case, the independent multi-path analysis is performed to acquire the motion frequencies of the plurality of targets, and or the joint analysis is performed to eliminate interference caused by the channel spread of the plurality of targets.

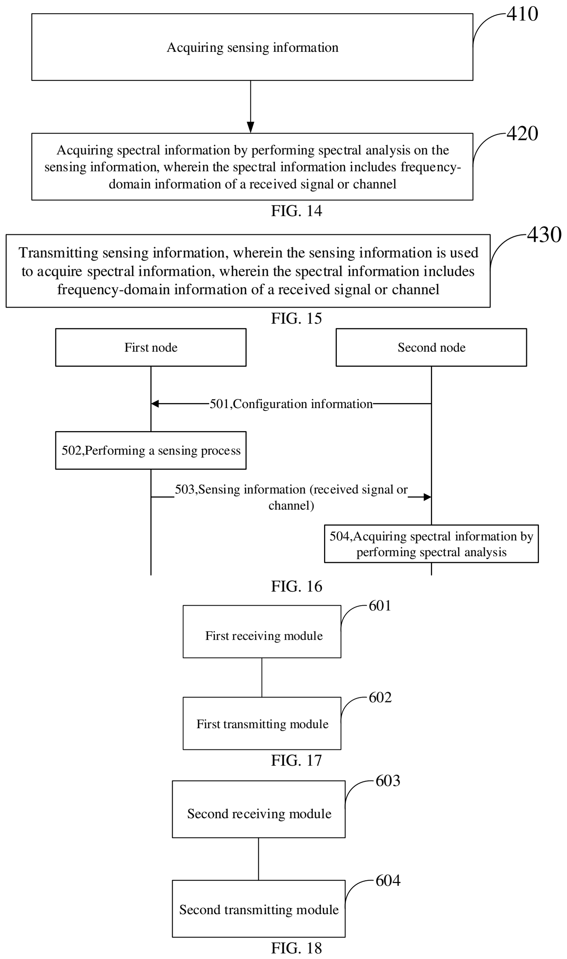

FIG. 14 is a flowchart of a method for information feedback according to some embodiments of the present disclosure. The method may be performed by a second node. The second node is the sensing processor node 10 in the sensing system illustrated in FIG. 10. The method may include the following processes.

**In S410,** the second node acquires sensing information.

In some embodiments, a first node transmits the sensing information. The sensing information carries indication information of the received signal or channel, the received signal or channel is used to acquire the spectral information, and the spectral information includes frequency-domain information of a received signal or channel. The second node receives the sensing information reported by the first node.

The first node is the sensing node. In some embodiments, the first node is the sensing receiver node. That is, upon receiving the received signal, the first node carries the received signal in the sensing information, and then transmits the sensing information to the second node. Alternatively, the first node performs channel estimation based on the received signal to acquire the estimated channel, carries the estimated channel in the sensing information, and then transmits the sensing information to the second node. In some embodiments, the first node acts as the sensing receiver node and the sensing transmitter node. The first node may be any one of the access network device or the terminal. The received signal refers to the sensing signal received by the sensing receiver node.

The second node is the sensing processor node. The sensing processor node needs to acquire the sensing information, or process the sensing information to acquire the sensing result. In some embodiments, the sensing processor node is used to process the sensing result/measurement result/feedback result. In some embodiments, the second node is the sensing processor node 10 in the sensing system illustrated in FIG. 10. The second node may be any one of the access network device, the terminal, the server, or the core network element.

It should be noted that the method is applicable to various sensing modes illustrated in FIG. 1. For example, the sensing transmitter node and the sensing receiver node are the same node or different nodes, and the like.

The sensing refers to a process of acquiring information of a target region, a target environment, or a sensing target using electromagnetic waves (including light waves) and/or sound waves. In some embodiments, the sensing refers to a process of acquiring spatial information using electromagnetic waves (including light waves) and/or sound waves. The space includes at least one of the target region, the target environment, and the sensing target. The sensing target may be a living entity, for example, a human body; or the sensing target may be a non-living entity, for example, a vehicle. In some embodiments, the sensing is a process of acquiring information based on reflection of the sensing signal on the object and the sensing target in the target region and the target environment; or the sensing is a process of acquiring information based on refraction or scattering of the object and the sensing target in the target region and the target environment.

In some embodiments, the "sensing" in the embodiments of the present disclosure may also be replaced by "monitoring," "positioning," "distance measurement," "speed measurement," "angle measurement," "target imaging," "target detection," "target tracking," "target recognition," and the like.

**In S420,** the second node acquires spectral information by performing spectral analysis on the sensing information, wherein the spectral information includes frequency-domain information of a received signal or channel.

In some embodiments, the second node performs the spectral analysis on the received signal or channel carried in the sensing information to acquire the spectral information. The spectral information includes the frequency-domain information related to the received signal. The spectral information includes the frequency-domain information of the received signal or channel. Typically, the channel is estimated based on the received signal.

In some embodiments, the spectral information includes at least one of:

f frequency-domain information acquired by performing spectral analysis on the received signal at at least one time instant;

f frequency-domain information acquired by performing spectral analysis on the channel at at least one time instant; or

f frequency-domain information acquired by performing spectral analysis on the received signal that is processed at at least one time instant.

The received signal is a signal received by the first node during the sensing process. During the sensing process, the sensing transmitter node transmits the sensing signal, and the sensing signal is propagated to the sensing receiver node via reflection, refraction, scattering in the channel and is then received by the sensing receiver node. Therefore, in the embodiments, the sensing signal transmitted by the sensing transmitter node during the process is referred to as the sensing signal or the transmitted signal of the sensing signal, and the sensing signal received by the sensing receiver node during the process and propagated through the channel is referred to as the received signal or the received signal of the sensing signal. In some embodiments, the received signal includes mixed signals from a plurality of paths, and the signal from each path is acquired upon processing of the received signal.

In some embodiments, the channel is determined based on the received signal. In some modes, the channel is determined by estimating the received signal. In some embodiments, the channel is determined by performing the LS estimation on the received signal, that is, dividing the received signal by the transmitted signal; and in some embodiments, the channel is determined by performing the MMSE estimation on the received signal, that is, multiplying the received signal by the MMSE filter. It should be noted that the LS estimation and the MMSE estimation are only two possible implementations, the modes of determining the channel by estimating the received signal are not limited to this, and any estimation mode that can determine the channel information by estimating the received signal should be within the scope of protection. In some modes, an operation is performed between the received signal and the transmitted signal, such that part of channel information is acquired. For example, for frequency-modulated continuous wave signals, the difference in frequency between the received signal and the transmitted signal is acquired, and the acquired frequency difference is positively correlated with the propagation time of the channel. That is, information of the propagation time of the channel is further acquired in the modes. The present disclosure does not limit the form of multiplication and division in the estimation method.

For example, the first node or the second node may acquire the estimated channel by dividing the received signal by the transmitted signal using LS channel estimation. Alternatively, the first node or the second node may acquire the estimated channel by multiplying the received signal by the MMSE filter using MMSE.

The processed received signal refers to information acquired upon processing of the received signal. The processing of the received signal may include, for example, denoising the received signal; dividing signals received on different carriers by one another; and dividing signals from different symbols or time slots by one another. It should be noted that the embodiments are only possible implementations of signal processing, the modes of signal processing of the received signal are not limited to this, and any mode that can process the received signal is within the scope of protection.

The channel may be any type of an LOS channel, a specified path channel, or an N-path channel. The LOS channel is a channel corresponding to the LOS, the specified path channel is a channel corresponding to the specified path, and the N-path channel includes N channels corresponding to N paths respectively.

The LOS channel refers to the channel over which the wireless signal propagates along a straight path. That is, the signal is not multi-path propagated, and thus is not affected by reflection, refraction, or scattering. In some embodiments, the LOS channel refers to a propagation path along which the sensing signal is transmitted by the sensing transmitter node, without any obstructions, and directly reaches the sensing receiver node. Alternatively, the LOS channel refers to a propagation path along which the sensing signal is reflected by the sensing target, without any obstructions, and directly reaches the sensing signal receiver node. The LOS is determined based on the signal at the receiver or attributes of the channel, for example, the shortest delay, the strongest energy, and the like.

The specified path refers to a path along which the sensing signal propagates or a path with a specific attribute, for example, a path with a second shortest delay.

The N-path channel refers to a channel over which the wireless signal travels a plurality of different propagation paths during the propagation process. A plurality of signals in N paths may have at least one of different delays, amplitudes, and phases in reaching the sensing receiver node. Phases of the N paths may be independent phase information or combined phase information of the N paths.

It should be noted that during the propagation process of the wireless signal, the wireless signal may directly reach the receiver, or may be reflected, refracted, or scattered by the object in the environment and reach the receiver.

Therefore, the receiver often receives superposition of a plurality of paths. The plurality of paths are distinguished using some technical means, for example, the time delay difference of the time-domain channels. However, the degree of distinguishment is associated with a structure (for example, a bandwidth) of the transmitted signal and a processing capability of the receiver. In the present disclosure, one of the LOS, the specified path, or the N paths refers to the path that may be distinguished based on the structure of the signal and the processing capability of the receiver. Due to limitation of the structure (for example, a bandwidth) of the transmitted signal and the processing capability of the receiver, the distinguishing capability is limited, and the distinguished path may also include a plurality of physical paths. Therefore, the concept of the path is relative and is defined under some conditions.

In some embodiments, the specified path channel may include the LOS channel. The N-path channel may include the LOS channel and the specified path channel.

In some embodiments, the first node carries the received signal in the sensing information and transmits the sensing information to the second node. The second node may process the received signal to acquire the processed received signal, or the second node may perform channel estimation based on the received signal to acquire the channel corresponding to the received signal.

In some embodiments, the first node carries at least one of the received signal, the received channel, or the processed received signal in the sensing information and transmits the sensing information to the second node. The second node directly perform spectral analysis on at least one of the received signal, the received channel, or the processed received signal carried in the sensing information to acquire the spectral information.

In some embodiments, the received signal or channel includes at least one of: an amplitude of the received signal or channel, a phase of the received signal or channel, an energy of the received signal or channel, or all parts of the received signal or channel.

In some embodiments, the amplitude further represents a magnitude of energy, and the energy is a square of the amplitude. The all parts of the received signal or channel may include the phase and the amplitude, or may include the phase and the energy, or may include the phase, the amplitude, and the energy.

It should be noted that the amplitude/phase/energy of the received signal is in correspondence with the received signal, and the amplitude/phase/energy of the channel is in correspondence with the channel (path). That is, one amplitude/phase/energy is set for one received signal/channel (path). In this case, the channel generally refers to a component of the received signal in the time domain or a path of the time-domain channel. The amplitude/phase/energy of the received signal/channel may also be the amplitude/phase/energy of the received signal/channel upon multi-path fusion. In this case, the channel generally refers to the frequency-domain signal or frequency-domain channel.

In general, for minor motions, the amplitude and energy change slightly and are easily covered by noise, and thus the spectral analysis on phase is prioritized in such cases. Sensing targets with the large motion amplitude are subject to phase wrapping, and thus spectral analysis of energy and/or amplitude is prioritized. More complete information may be acquired by performing analysis on complete channels, and thus phase and amplitude/energy are jointly analyzed to achieve a better effect. Thus, in a case where a motion amplitude of a sensing target is less than or equal to a first threshold, the spectral information includes frequency-domain information of the phase of the received signal or channel; or in a case where a motion amplitude of a sensing target is greater than a second threshold, the spectral information includes frequency-domain information of the amplitude of the received signal or channel, or includes frequency-domain information of the energy of the received signal or channel. The first threshold is less than or equal to the second threshold.

In some embodiments, the motion amplitude is determined based on amotion displacement, or the motion amplitude is determined based on a posture difference of the sensing target during the motion. In some embodiments, for breathing motions, the motion amplitude is determined based on a height of chest rise. Alternatively, for sit-up motions, the motion amplitude is determined based on a rotation angle or displacement of at least one joint point.

In some embodiments, the spectral information is the frequency-domain information acquired upon the spectral analysis on the received signal or channel. The spectral information may include at least one of: frequency-domain information of the amplitude of the received signal, frequency-domain information of the phase of the received signal, frequency-domain information of the energy of the received signal, frequency-domain information of the received signal (including the amplitude and the phase), frequency-domain information of the amplitude of the channel, frequency-domain information of the phase of the channel, frequency-domain information of the energy of the channel, frequency-domain information of the channel (including the amplitude and the phase), frequency-domain information of the amplitude of the processed received signal, frequency-domain information of the phase of the processed received signal, frequency-domain information of the energy of the processed received signal, or frequency-domain information of the processed received signal (including the amplitude and the phase).

In some embodiments, the spectral information includes all of frequency-domain information of the received signal and channel, or the spectral information includes part of frequency-domain information of the received signal and channel.

The frequency-domain information includes at least one of: a frequency component, a spectral coefficient on a frequency component, a normalized value of a spectral coefficient, or an approximate value of a spectral coefficient.

The spectral information may include all frequency components of the received signal or channel, or only include part of frequency components of the received signal or channel. The spectral information may include all of the frequency components of the received signal or channel and corresponding spectral coefficients of the frequency components, or only include part of the frequency components of the received signal or channel and corresponding spectral coefficients of the part of frequency components of the received signal or channel. The spectral coefficient may be an original value, a normalized value, or an approximate value determined based on an original value from a predetermined set of values.

In some embodiments, the second node performs the spectral analysis on the received signal or channel to acquire the spectral information. The spectral analysis mainly refers to frequency analysis on the time-domain signal. The frequency information of the time-domain signal is acquired by transitioning the time-domain signal to the frequency domain. Typical time-frequency transition method includes the DFT, the FFT, the Hilbert transformation, and the like.

The spectral information of the received signal or channel is a frequency spectrum acquired by performing frequency analysis on the time-domain signal measured within a spectral information analysis window. That is, the spectral information of the received signal or channel is acquired by transitioning the received signal or channel measured within the spectral information analysis window. In some embodiments, the frequency-domain spectral information is acquired via the FFT. In some embodiments, the frequency-domain spectral information is acquired via the DFT. In some embodiments, the frequency-domain spectral information is acquired via the Hilbert transformation. It should be noted that the method for acquiring the spectral information of the received signal or channel is not limited to the above methods, and any method for transitioning the time-domain signal to the frequency-domain signal to acquire the spectral information of the received signal or channel falls within the scope of protection.

The spectral information is acquired as follows.

1) Spectral information corresponding to the amplitude/energy/phase/channel (including the amplitude and the phase) of the path in M time instants.

That is, the spectral information is acquired based on M channels in a path. M is a positive integer.

In some embodiments, the first node receives M received signals at the M time instants and measures the M received signals. Each of the received signals includes a signal from the path. The second node performs channel estimation based on each of the received signals, and acquires M channels corresponding to each of the M time instants.

2) Spectral information corresponding to amplitudes/energies/phases/channels (including the amplitudes and the phases) of N paths in M time instants. The spectral information of each path is separately processed, or jointly processed.

In some embodiments, the spectral information is acquired by separately processing each of the N paths. The spectral information is acquired based on M channels in each of N paths. M is a positive integer, and N is an integer greater than 1. In some embodiments, the spectral information is acquired by jointly processing different paths in the N paths. The spectral information is acquired based on M channels in the N paths. M is a positive integer, and N is an integer greater than 1.

In some embodiments, the first node acquires a received signal upon receiving the sensing signal at a time instant, and the received signal may include signals from a plurality of paths. A channel corresponding to each of the plurality of paths and a mixed channel corresponding to the plurality of paths may be acquired by performing channel estimation on the received signal. The path refers to a transmission path of the sensing signal. After the sensing transmitter node transmits the sensing signal, the sensing signal may reach the sensing receiver node via the plurality of paths. The received signal acquired by receiving the sensing signal by the sensing receiver node at a time instant may include signals from the plurality of paths. The sensing receiver node may separate the received signals from the plurality of paths, and acquire the signal corresponding to each of the paths. A channel corresponding to each of the paths is acquired by performing channel estimation on the signals from each of the paths. The channel may refer to a channel estimation result acquired based on the received signal.

In some embodiments, the first node receives M received signals at the M time instants and measures the M received signals. Each of the received signals includes signals from N paths. The first node or the second node performs channel estimation based on the signal from each of the paths, and acquires N channels. That is, the first node or the second node may acquire M*N channels.

In some embodiments, the second node performs the spectral analysis on at least one of the following parameters of the channel, that is, the amplitude, the phase, or the energy, such that the spectral information is acquired. Then, the second node performs the spectral analysis on M*N*x pieces of data. x is equal to a number of parameters of the channel. For example, in a case where the parameters include the amplitude, the phase, and the energy, x is equal to 3.

For example, the second node performs the spectral analysis on phases of the M*N channels measured at the M time instants to acquire the spectral information, the second node performs the spectral analysis on amplitudes of the M*N channels measured at the M time instants to acquire the spectral information, the second node performs the spectral analysis on energies of the M*N channels measured at the M time instants to acquire the spectral information, the second node performs the spectral analysis on phases and amplitudes of the M*N channels measured at the M time instants to acquire the spectral information, the second node performs the spectral analysis on phases and energies of the M*N channels measured at the M time instants to acquire the spectral information, the second node performs the spectral analysis on amplitudes and energies of the M*N channels measured at the M time instants to acquire the spectral information, or the second node performs the spectral analysis on phases, amplitudes, and energies of the M*N channels measured at the M time instants to acquire the spectral information.

The second node may perform the spectral analysis on combined M*N channels to acquire the spectral information.

The second node may perform the spectral analysis on each channel in each of the N paths to acquire the spectral information corresponding to the path. The spectral information includes N sets of frequency-domain information corresponding to the N paths, and a set of frequency-domain information is acquired by performing the spectral analysis on M channels in a path.

In some embodiments, M refers to M measurement time instants. The M channels are in one-to-one correspondence with M time instants.

M is determined by the communication protocol; or M is determined based on the configuration information; or M is determined based on the sensing service. In some embodiments, M is specific to a sensing service, a sensing task, sensing receiver nodes, or sensing transmitter nodes. The first node is one of the sensing receiver nodes, and the sensing transmitter nodes are the same or different from the sensing receiver nodes.

The sensing service and the sensing task may have the same or different meaning. In a case where the sensing service and the sensing task have different meanings, a sensing service includes a plurality of sensing tasks. The sensing service/sensing task may only sense one or a plurality of parameters. The parameter includes at least one of a speed, a delay, a distance, or an energy.

M may be configured by the sensing manager node or the sensing processor node. M is defined based on any one of the following configurations.

> **1) Direct configuration:** M is determined based on first configuration information. The first configuration information is used to configure a spectral information analysis window of the spectral information. The spectral information analysis window is a time window for analyzing the received signal or channel, and the second node selects M received signals or channels at M different time instants within the spectral information analysis window for spectral analysis.

The first configuration information includes at least one of: a start time of the spectral information analysis window, a duration of the spectral information analysis window, an end time of the spectral information analysis window, a period of the spectral information analysis window, or a time interval between adjacent time instants in M time instants.

In some embodiments, the spectral information analysis window is repetitive, and thus the period of the spectral information analysis window is a repetitive period of the spectral information analysis window. In some embodiments, the M time instants are evenly spaced apart from each other, and thus a time interval in the first configuration information refers to the time interval between any two adjacent time instants in the M time instants. In some embodiments, the M time instants are unevenly spaced apart from each other. In this case, a time interval in the first configuration information includes a time interval corresponding to each two adjacent time instants in the M time instants, i.e., (M-1) time intervals totally.

That is, time positions of the M time instants are configured. For example, the start times (offsets), the durations, and the time interval between adjacent time instants within the time window of the M time instants are configured.

For example, the second node receives the first configuration information from the sensing manager node. The first configuration information includes the start time, the duration, and the time interval of the spectral information analysis window. For example, the start time is the first symbol, the duration is 10 symbols, and the time interval between adjacent time instants is two symbols. Then, M is equal to 4, and the M time instants are the first symbol, the 4th symbol, the 7th symbol, and the 10th symbol. The second node performs the spectral analysis on the received signal or channel received at the first symbol, the 4th symbol, the 7th symbol, and the 10th symbol to acquire the spectral information.

**2) Indirect configuration:** M is determined based on second configuration information. The second configuration information is used to configure a transmission time of a sensing signal, and the sensing signal is an initial signal corresponding to the received signal.

The second configuration information includes at least one of: a start time for transmission of the sensing signal, a duration for transmission of the sensing signal, an end time for transmission of the sensing signal, or a period or time interval for transmission of the sensing signal.

That is, the M time instants are indirectly acquired based on configuration of other parameters. For example, the transmission time of the sensing signal within a period includes the start symbol/slot S, the time-domain interval T, and the duration D within the period.

For example, the second node receives the second configuration information from the sensing manager node or the sensing transmitter node. The second configuration information includes the start time and the time interval of the sensing signal within a period. For example, the period of the sensing signal is 10 symbols, the start time of the sensing signal within the period is the first symbol, and the time interval is four symbols. Then, M is equal to 2, and the M time instants are the first symbol and the $5^{th}$ symbol.

3) **Combined configuration:** M is determined based on the first configuration information and the second configuration information.

That is, part of parameters are determined based on the configuration information of the spectral information analysis window, and part of parameters are determined based on other parameters. The other parameters may be used to indicate the time-domain position of the sensing signal within the spectral information analysis window, for example, the start symbol and the time interval/period. For example, M is determined based on the configuration information of the sensing signal, the time-domain start symbol S, the transmission time interval/period T, and the transmission times within the W-sized window starting from the start symbol S. The M time instants may also be M sensing signal transmission times within the W-sized window starting from a symbol n, and the symbol/slot n generally depends on a sensing information report time. For example, an end position of the window W is m symbols/frames before the sensing information report time instant K, and the symbol/slot n is determined based on the dimension of W.

In some embodiments, M is a number of time-domain signals for spectral analysis, and the dimension of the spectral information analysis window is determined based on M. M is correlated with a motion period of the sensing target, and a time duration corresponding to M is generally greater than or equal to the motion period of the sensing target. The time duration corresponding to M is greater than or equal to a motion period of a sensing target, and/or the time duration corresponding to M is greater than or equal to a channel change period of a sensing target.

The time duration corresponding to M is a window length of the spectral information analysis window. The time duration is equal to a product of M and the time interval between adjacent times, a product of (M-1) and the time interval between adjacent time instants, a product of M and the period, or a product of (M-1) and the period.

For example, the typical frequency of breathing is 0.2 Hz, and the period is 5s. Then the time duration corresponding to M may be set to 5s, or a value greater than 5s, such as 8s or 10s. In the case where the motion period of the target is undetermined, but a valid period range is present, M needs to cover all cases within the valid period range. For example, in a case where the valid range for the breathing frequency is from 0.1 to 0.5 Hz, and the period ranges from 2 to 10s, M may be set to 10s, or a value greater than 10 s, such as 15s.

In some embodiments, the time in the first configuration information and the second configuration information are absolute times, for example, seconds or milliseconds. In some embodiments, the times in the first configuration information and the second configuration information are relative times, for example, a number of slots, a number of symbols, or a number of frames.

In some embodiments, in a case where the spectral information is acquired based on M channels in each of N paths, (N-X) channels in N channels corresponding to the first time instant are default values (for example, 0) in a case where a number X of channels measured at a first time instant in the M time instants is less than N. X is a positive integer. The first time instant is any time instant in the M time instants.

Alternatively, in a case where a number X of channels measured at a first time instant in the M time instants is greater than N, N channels corresponding to the first time instant are N channels selected from X channels.

In some embodiments, in a case where the number X of channels is greater than N, the N channels are at least one type of: channels corresponding to N paths with a strongest energy in the X channels, or channels corresponding to N paths with a shortest delay in the X channels.

The N paths with the strongest energy may include N paths with the strongest energy and the same energy, or first N paths in a descending order of energies. The N paths with the shortest delay may be N paths with the shortest delay and the same delay, or first N paths in a descending order of delays.

In some embodiments, in a case where the N paths have the strongest energy and the same energy, the N paths are selected from the X channels, or the X channels are ranked in a descending order of energies of the paths and first N channels are selected. That is, the N channels are N paths in a descending order of energies of the paths.

In some embodiments, in a case where the N paths have the shortest delay and the same delay, the N paths are selected from the X channels, or the X channels are ranked in a descending order of delays of the paths and first N channels are selected. That is, the N channels are N paths in a descending order of delays of the paths.

In some embodiments, in a case where the sensing is multi-target sensing, the spectral information of the plurality of targets is ranked in an order. For example, the spectral information of the plurality of targets is ranked in an order of intensities of the received signals or an order of the delays. For example, in FIG. 9, corresponding frequencies in an ascending order are {0.2, 0.5} based on the delay of the signal.

In a case where at least two sensing targets are present, the spectral information of the at least two of sensing targets is ranked in an order of first parameters. Each of the first parameters includes at least one of: an intensity of the received signal, a delay of the received signal, or a geographic location grid corresponding to the received signal.

The geographic location grid corresponding to the received signal is used to indicate a geographic location where a reflection point of the received signal is located.

In some embodiments, the second node may filter out valid spectral information and then report the valid spectral information based on the constraint (for example, at least one of a valid range for the spectral information, a decision threshold (a dimension of the frequency component) of the spectral information, and a reported number of spectral information) to make the spectral information to be closer to a requirement of the sensing task/sensing service. The constraint may be configured or defined by a protocol. For example, for FIG. 3(1), although the acquired spectral information is 0 and 0.2, the valid range for breathing is from 0.1 to 0.5 Hz, such that the second node only filters out 0.2.

In some embodiments, the spectral information is determined based on a report constraint. The report constraint includes at least one of: a valid range for the spectral information, a decision threshold for the spectral information, or a reported amount of the spectral information.

The valid range for the spectral information includes at least one of a valid range for the frequency component, or a valid range for the spectral coefficient. The valid range for the frequency component or the valid range for the spectral coefficient is determined based on a regular motion period of the sensing task/sensing service/sensing target.

Similarly, the decision threshold for the spectral information includes at least one of a decision threshold for the frequency component or a decision threshold for the spectral coefficient. The decision threshold for the frequency component or the decision threshold for the spectral coefficient is determined based on a regular motion period for the sensing task/sensing service/sensing target.

In some embodiments, the second node filters out the spectral information within the valid range, and/or, the spectral information that satisfies the decision threshold, and/or, the spectral information at a number (the reported amount) based on the constraint.

In summary, in the method according to the embodiments, the first node reports the information acquired in the sensing process to the second node, and the second node acquires the spectral information by performing the spectral analysis on the information. The spectral information may greatly represent the motion frequency of the sensing target. Thus, the second node may acquire the spectral information directly related to the sensing task. For example, for the breathing sensing task, the breathing frequency is acquired.

FIG. 15 is a flowchart of a method for information feedback according to some embodiments of the present disclosure. The method may be performed by a first node. The first node is the sensing node 20 in the sensing system illustrated in FIG. 10. The method may include the following process.

In S430, the first node transmits sensing information, wherein the sensing information is used to acquire spectral information, wherein the spectral information includes frequency-domain information of a received signal or channel.

In some embodiments, a second node receives the sensing information reported by the first node. The sensing information carries the received signal or channel. In some embodiments, the second node is a sensing processor node and is used to process the sensing information, and the first node is a sensing node and is used to perform the sensing process and generate the sensing information.

In some embodiments, the first node performs the sensing to receive the sensing signal, and reports the received signal to the second node upon acquiring the received signal. And/or, the first node performs the sensing to receive the sensing signal, performs the channel estimation on the received signal corresponding to the sensing signal to acquire the channel, and reports the channel to the second node. And/or, the first node performs the sensing to receive the sensing signal, processes the received signal corresponding to the sensing signal to acquire the processed received signal, and reports the processed received signal to the second node.

In summary, in the method according to the embodiments, the first node reports the information acquired in the sensing process to the second node, and the second node acquires the spectral information by performing the spectral analysis on the information. The spectral information may greatly represent the motion frequency of the sensing target. Thus, the second node may acquire the spectral information directly related to the sensing task. For example, for the breathing sensing task, the breathing frequency is acquired.

FIG. 16 is a flowchart of a method for information feedback according to some embodiments of the present disclosure. The method may be performed by a first node and a second node. The first node is the sensing node 20 in the sensing system illustrated in FIG. 10, and the second node is the sensing processor node 10 in the sensing system illustrated in FIG. 10. The method may include the following processes.

In S501, the second node configures configuration information of sensing for the first node.

In some embodiments, the second node further acts as a sensing manager node. The configuration information of sensing includes at least one of the first configuration information of the sensing signal or the configuration information of the sensing task.

In some embodiments, the first node receives the first configuration information of the sensing signal. The first configuration information of the sensing signal includes at least one of: time-domain information of the sensing signal, frequency-domain information of the sensing signal, or sequence information of the sensing signal. The time-domain information of the sensing signal includes at least one of a period, a period offset, a symbol offset, a start time, a time interval, a duration, or an end time. The frequency-domain information of the sensing signal includes at least one of a start RB, a signal bandwidth, or a sequence cluster. The sequence information of the sensing signal include a sequence initialization seed. The sequence initialization seed is used to determine the sequence of the sensing signal.

In some embodiments, the first node further receives the sensing signal based on the first configuration information of the sensing signal to acquire the received signal.

In some embodiments, the first node further receives the configuration information of the sensing task. The configuration information of the sensing task is used to indicate configuration of the sensing task, sensing service, sensing reporting, and the like.

**In S502,** the first node performs a sensing process.

The first node measures the received signal to acquire the received signal or channel.

In some embodiments, the sensing transmitter node transmits the sensing signal. The sensing receiver node receives the sensing signal based on the configuration information of the sensing signal or the measurement configuration of the sensing signal to acquire the received signal. The sensing transmitter node and the sensing receiver node may be the same node or different nodes. The first node is one of the sensing receiver nodes.

In some embodiments, the first node can process the received signal. For example, the first node performs channel estimation based on the received signal to acquire the channel.

**In S503,** the first node transmits the sensing information to the second node, wherein the sensing information carries the received signal or channel.

**In S504,** the second node performs the spectral analysis on the sensing information to acquire the spectral information.

For the process of performing the spectral analysis on the received signal or channel in the sensing information, reference may be made to related description in above embodiments, which is not repeated herein any further.

In some embodiments, the second node determines a validity or reliability of the spectral information. The validity or reliability is represented by at least one of: an SINR, a reliability probability, or an LOS probability.

In some embodiments, the LOS probability refers to the probability that a path corresponding to the spectral information is an LOS. The higher the LOS probability, the more reliable the spectral information. The reliability probability refers to a probability determined based on the SINR or LOS. For example, in a case where the SINR is greater than 20 dB, the reliability probability is 99%.

In the embodiment of the present disclosure, S501, S502, S503, and S504 may be implemented as independent embodiments. S501 may be implemented as an independent embodiment, S502 may be implemented as an independent embodiment, S503 may be implemented as an independent embodiment, and S504 may be implemented as an independent embodiment. Alternatively, S502 and S503 may be implemented as an independent embodiment. Alternatively, S501, S502, and S303 may be implemented as an independent embodiment. Alternatively, S502, S503, and S304 may be implemented as an independent embodiment.

In summary, in the method according to the embodiments, the spectral analysis on the channel parameter effectively reflects the motion frequency of the sensing target and separates the motions at different frequencies for independent or joint analysis. For the low SNR case, the frequency components of the motion are extracted. For the multi-path case, the independent multi-path analysis is performed to acquire the motion frequencies of the plurality of targets, and or the joint analysis is performed to eliminate interference caused by the channel spread of the plurality of targets.

FIG. 17 is a block diagram of an apparatus for information feedback according to some embodiments of the present disclosure. The apparatus has functions for implementing the method embodiments implemented by the first node. The function may be implemented by hardware or by hardware executing corresponding software. The apparatus may be the first node described above or may be provided in the first node. As illustrated in FIG. 17, the apparatus may include a first transmitting module 602.

The first transmitting module 602 is configured to transmit spectral information, wherein the spectral information is frequency-domain information of a received signal or channel.

In some embodiments, the spectral information includes at least one of: frequency-domain information acquired by performing spectral analysis on the received signal at at least one time instant, frequency-domain information acquired by performing spectral analysis on the channel at at least one time instant, or frequency-domain information acquired by performing spectral analysis on the received signal that is processed at at least one time instant.

In some embodiments, the received signal or channel includes at least one of: an amplitude of the received signal or channel, a phase of the received signal or channel, an energy of the received signal or channel, or all parts of the received signal or channel.

In some embodiments, in a case where a motion amplitude of a sensing target is less than or equal to a first threshold, the spectral information includes frequency-domain information of the phase of the received signal or channel;

or in a case where a motion amplitude of a sensing target is greater than a second threshold, the spectral information includes frequency-domain information of the amplitude of the received signal or channel, or includes frequency-domain information of the energy of the received signal or channel; wherein the first threshold is less than or equal to the second threshold.

In some embodiments, the frequency-domain information includes at least one of: a frequency component, a spectral coefficient on a frequency component, a normalized value of a spectral coefficient, or an approximate value of a spectral coefficient.

In some embodiments, the spectral information is acquired based on M channels in a path, wherein M is a positive integer; the spectral information is acquired based on M channels in each of N paths, wherein M is a positive integer, and N is an integer greater than 1; or the spectral information is acquired based on M channels in N paths, wherein M is a positive integer, and N is an integer greater than 1.

In some embodiments, M channels are in one-to-one correspondence with M time instants.

In some embodiments, the spectral information is acquired based on M channels in each of N paths, wherein in a case where a number X of channels measured in a first time instant in the M time instants is less than N, (N-X) channels in N channels corresponding to the first time instant are default values, wherein X is a positive integer; or in a case where a number X of channels measured in a first time instant in the M time instants is greater than N, N channels corresponding to the first time instant are N channels selected from X channels.

In some embodiments, in a case where the number X of channels is greater than N, the N channels are at least one type of: channels corresponding to N paths with a strongest energy in the X channels, or channels corresponding to N paths with a shortest delay in the X channels.

In some embodiments, the spectral information is acquired by separately processing each of the N paths, or by jointly processing different paths of the N paths.

In some embodiments, M is specific to a sensing task, sensing receiver nodes, or sensing transmitter nodes, wherein the first node is one of the sensing receiver nodes, and the sensing transmitter nodes are the same or different from the sensing receiver nodes.

In some embodiments, M is defined by a communication protocol, determined based on configuration information, or determined based on a sensing service.

In some embodiments, M is determined based on first configuration information, wherein the first configuration information is used to configure a spectral information analysis window of the spectral information;

M is determined based on second configuration information, wherein the second configuration information is used to configure a transmission time of a sensing signal, wherein the sensing signal is an initial signal corresponding to the received signal; or
M is determined based on first configuration information and second configuration information.

In some embodiments, the first configuration information includes at least one of: a start time of the spectral information analysis window, a duration of the spectral information analysis window, an end time of the spectral information analysis window, a period of the spectral information analysis window, or a time interval between adjacent time instants in M time instants.

In some embodiments, the second configuration information includes at least one of: a start time for transmission of the sensing signal, a duration for transmission of the sensing signal, an end time for transmission of the sensing signal, or a period or time interval for transmission of the sensing signal.

In some embodiments, a time duration corresponding to M is greater than or equal to a motion period of a sensing target, and/or a time duration corresponding to M is greater than or equal to a channel change period of a sensing target.

In some embodiments, in a case where at least two of sensing targets are present, the spectral information of the at least two of sensing targets is reported based on an order of first parameters, wherein each of the first parameters includes at least one of: an intensity of the received signal, a delay of the received signal, or a geographic location grid corresponding to the received signal.

In some embodiments, the first transmitting module 602 is configured to report a validity or reliability of the spectral information.

In some embodiments, the validity or reliability is represented by at least one of: an SINR, a reliability probability, or an LOS probability.

In some embodiments, the spectral information is determined based on a report constraint, wherein the report constraint includes at least one of: a valid range for the spectral information, a decision threshold for the spectral information, or a reported amount of the spectral information.

In some embodiments, the apparatus may further include a first receiving module 601, configured to acquire the channel by measuring the received signal.

In some embodiments, the first receiving module 601 is configured to receive configuration information of a sensing signal, wherein the sensing signal is an initial signal corresponding to the received signal, and the configuration information of the sensing signal includes at least one of: time-domain information of the sensing signal, frequency-domain information of the sensing signal, or sequence information of the sensing signal.

In some embodiments, the channel includes at least one type of: an LOS channel, a specified path channel, or an N-path channel, wherein N is a positive integer.

The first transmitting module 602 is configured to perform at least one of S210 or S303, and reference may be made to related description in above process, which is not described herein any further.

The first receiving module 601 is configured to perform S302, and reference may be made to related description in above process, which is not described herein any further.

In some embodiments, the apparatus further includes a processing module 606, configured to acquire spectral information by performing spectral analysis on sensing information, wherein the spectral information includes frequency-domain information of a received signal or channel.

The first transmitting module 602 is practiced as a transmitter or a transceiver, the first receiving module 601 is practiced as a receiver or a transceiver, and the processing module 606 is practiced as a processor and a memory.

FIG. 18 is a block diagram of an apparatus for information feedback according to some embodiments of the present disclosure. The apparatus has functions for implementing the method embodiments implemented by the second node. The function may be implemented by hardware or by hardware executing corresponding software. The apparatus may be the second node described above or may be provided in the second node. As illustrated in FIG. 18, the apparatus may include a second receiving module 603.

The second receiving module 603 is configured to receive spectral information, wherein the spectral information is frequency-domain information of a received signal or channel.

In some embodiments, the second receiving module 603 is configured to receive a validity or reliability of the spectral information.

In some embodiments, the apparatus further includes: a second transmitting module 604, configured to transmit configuration information of a sensing signal, wherein the sensing signal is an initial signal corresponding to the received signal, and

the configuration information of the sensing signal includes at least one of: time-domain information of the sensing signal, frequency-domain information of the sensing signal, or sequence information of the sensing signal.

The second receiving module 603 is configured to perform S220, and reference may be made to related description in above process, which is not described herein any further.

The second transmitting module 604 is configured to perform S301, and reference may be made to related description in above process, which is not described herein any further.

The second receiving module 603 is practiced as a receiver or a transceiver, and the second transmitting module 604 is practiced as a transmitter or a transceiver.

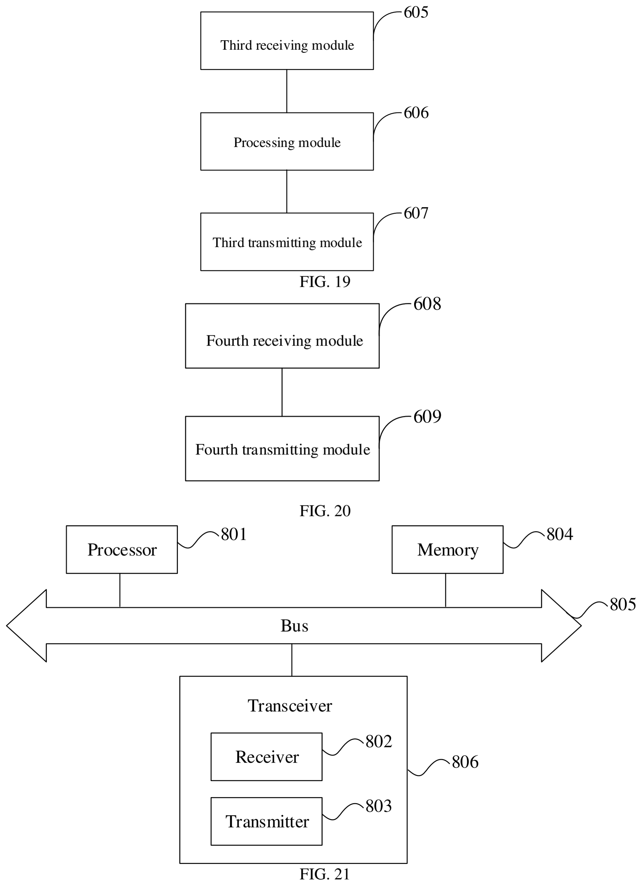

FIG. 19 is a block diagram of an apparatus for information analysis according to some embodiments of the present disclosure. The apparatus has functions for implementing the method embodiments implemented by the second node. The function may be implemented by hardware or by hardware executing corresponding software. The apparatus may be the second node described above or may be provided in the second node. As illustrated in FIG. 19, the apparatus may include a third receiving module 605 and a processing module 606,

The third receiving module 605 is configured to acquire sensing information.

The processing module 606 is configured to acquire spectral information by performing spectral analysis on the sensing information, wherein the spectral information includes frequency-domain information of a received signal or channel.

In some embodiments, the processing module 606 is configured to determine a validity or reliability of the spectral information.

The third receiving module 605 is configured to perform S410, and reference may be made to related description in above process, which is not described herein any further.

In some embodiments, the apparatus further includes: a third transmitting module 607, configured to transmit configuration information of a sensing signal, wherein the sensing signal is an initial signal corresponding to the received signal, and the configuration information of the sensing signal includes at least one of: time-domain information of the sensing signal, frequency-domain information of the sensing signal, or sequence information of the sensing signal.

The processing module 606 is configured to perform at least one of S420 or S504, and reference may be made to related description in above process, which is not described herein any further.

The third transmitting module 607 is configured to perform S501, and reference may be made to related description in the above process, which is not described herein any further.

The third receiving module 605 is practiced as a receiver or a transceiver, the processing module 606 is practiced as a processor and a memory, and the third transmitting module 607 is practiced as a transmitter or a transceiver.

FIG. 20 is a block diagram of an apparatus for information analysis according to some embodiments of the present disclosure. The apparatus has functions for implementing the method embodiments implemented by the first node. The function may be implemented by hardware or by hardware executing corresponding software. The apparatus may be the first node described above or may be provided in the first node. As illustrated in FIG. 20, the apparatus may include: a fourth transmitting module 609.

The fourth transmitting module 609 is configured to transmit sensing information, wherein the sensing information is used to acquire spectral information, wherein the spectral information includes frequency-domain information of a received signal or channel.

In some embodiments, the apparatus further includes a fourth receiving module 608, configured to receive configuration information of a sensing signal, wherein the sensing signal is an initial signal corresponding to the received signal, and the configuration information of the sensing signal includes at least one of: time-domain information of the sensing signal, frequency-domain information of the sensing signal, or sequence information of the sensing signal.

The fourth transmitting module 609 is configured to perform at least one of S430 or S503, and reference may be made to related description in above process, which is not described herein any further.

The fourth receiving module 608 is configured to perform S502, and reference may be made to related description in above process, which is not described herein any further.

The fourth transmitting module 609 is practiced as a transmitter or a transceiver, and the fourth receiving module 608 is practiced as a receiver or a transceiver.

It should be noted that when the apparatus according to the embodiments implements its functions, division of the functional modules is merely exemplary. In actual applications, the functions may be assigned to and implemented by different functional modules as required, that is, an internal structure of the apparatus is divided into different functional modules to implement all or some of the foregoing functions.

Regarding the apparatus according to the above embodiments, specific manners of performing operations by the modules have been described in detail in the embodiments of the related method, and details are not described herein any further.

FIG. 21 is a schematic structural diagram of a sensing device according to some embodiments of the present disclosure. The sensing device may include a processor 801, a receiver 802, a transmitter 803, a memory 804, and a bus 805.

The processor 801 includes one or more processing cores. The processor 801 achieves various functional applications and perform information processing by running one or more software programs and modules. In some embodiments, the processor 801 is configured to perform functions and processes of the parsing module 940.

The receiver 802 and the transmitter 803 are practiced as a transceiver 806. The transceiver 806 may be a communication chip. The receiver 802 is configured to perform functions and processes of the receiving module, and the transmitter 803 is configured to perform functions and processes of the transmitting module and the receiving module.

The memory 804 is communicably connected to the processor 801 via the bus 805. The memory 804 is configured to store one or more computer programs, and the processor 801 is configured to run the one or more computer programs to implement various processes performed by the nodes in the above method embodiments.

In addition, the memory 804 is practiced by any type of volatile or non-volatile storage device or a combination thereof. The volatile or non-volatile storage device includes, but is not limited to: a read-access memory (RAM), a read-only memory (ROM), an erasable programmable read-only memory (EPROM), an electrically erasable programmable read-only memory (EEPROM), a flash memory or other solid-state storage technologies, a compact disc ROM (CD-ROM), a digital video disc (DVD) or other optical memories, a tape cartridge, a tape, a disk storage or other magnetic storage devices.

In a case where the sensing device is the first node, the processor and the transceiver in the embodiments of the present disclosure are configured to perform the processes implemented by the first node in the method shown in FIG. 11 to FIG. 16, which is not described herein any further.

In some embodiments, in a case where the sensing device is the first node, the transmitter 803 is configured to transmit spectral information, wherein the spectral information is frequency-domain information of a received signal or channel; or transmit sensing information (including the received signal or channel), wherein the sensing information is used to acquire spectral information, wherein the spectral information includes frequency-domain information of a received signal or channel.

In a case where the sensing device is the second node, the processor and the transceiver in the embodiments of the present disclosure are configured to perform the processes implemented by the second node in the method shown in FIG. 11 to FIG. 16, which is not described herein any further.

In some embodiments, in a case where the sensing device is the second node, the receiver 802 is configured to receive spectral information, wherein the spectral information is frequency-domain information of a received signal or channel; or acquire sensing information(including the received signal or channel), and the processing module is configured to acquire spectral information by performing spectral analysis on the sensing information, wherein the spectral information includes frequency-domain information of a received signal or channel.

Some embodiments of the present disclosure further provide a computer-readable storage medium. The storage medium stores one or more computer programs, and the one or more computer programs, when loaded and run by a processor of a first node and a second node, cause the terminal device to perform the method for information feedback or the method for information analysis.

In some embodiments, the computer-readable storage medium includes a ROM, a RAM, an SSD, an optical disc, or the like. The RAM may include a resistance random access memory (ReRAM) and a dynamic random-access memory (DRAM).

Some embodiments of the present disclosure further provide a chip. The chip includes programmable logic circuitry and/or one or more program instructions. The chip, when running on a first node and a second node, cause the terminal device to perform the method for information feedback or the method for information analysis.

Some embodiments of the present disclosure further provide a computer program product or a computer program. The computer program product or the computer program includes one or more computer instructions stored in a computer-readable storage medium. The one or more computer instructions, when read from the computer-readable storage medium and executed by a processor of a first node and a second node, cause the first node and the second node to perform the method for information feedback or the method for information analysis.

It should be understood that the term "indicate" in the embodiments of the present disclosure means the direct indication, indirect indication, or an associated relationship. For example, A indicating B means that A directly indicates B, for example, B is acquired by A; A indirectly indicates B, for example, A indicates C and B is acquired by C; A and B are associated. The term "corresponding" mean that there is a direct correspondence relationship or indirect correspondence relationship between two objects, an association relationship between two objects, a relationship of indicating or being indicated, or a relationship of configuring and being configured. The mentioned term "a plurality of" herein means two or more. The term "and/or" describes the association relationship between the associated objects, and indicates that three relationships may be present. For example, the phrase "A and/or B" means (A), (B), or (A and B). The symbol "I" generally indicates an "or" relationship between the associated objects. In addition, serial numbers of the processes described herein only show an exemplary possible sequence of performing the processes. In some other embodiments, the processes may also be performed out of the numbering sequence, for example, two processes with different serial numbers are performed simultaneously, or two processes with different serial numbers are performed in a reverse order to the illustrated sequence, which is not limited in the present disclosure.

Those skilled in the art should understand that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer-readable medium. The computer-readable medium includes a computer storage medium and a communication medium, wherein the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements, and the like, made within the spirit and principle of the present disclosure should fall within the protection scope of the present disclosure.

**Claims**

1. A method for information feedback, performed by a first node, the method comprising:
   transmitting spectral information, wherein the spectral information is frequency-domain information of a received signal or channel.

2. The method according to claim 1, wherein the spectral information comprises at least one of:

   frequency-domain information acquired by performing spectral analysis on the received signal at at least one time instant;
   frequency-domain information acquired by performing spectral analysis on the channel at at least one time instant; or
   frequency-domain information acquired by performing spectral analysis on the received signal that is processed at at least one time instant.

3. The method according to claim 1 or 2, wherein the received signal or channel comprises at least one of: an amplitude of the received signal or channel, a phase of the received signal or channel, an energy of the received signal or channel, or all parts of the received signal or channel.

4. The method according to claim 3, wherein

in a case where a motion amplitude of a sensing target is less than or equal to a first threshold, the spectral information comprises frequency-domain information of the phase of the received signal or channel; or
in a case where a motion amplitude of a sensing target is greater than a second threshold, the spectral information comprises frequency-domain information of the amplitude of the received signal or channel, or comprises frequency-domain information of the energy of the received signal or channel;
wherein the first threshold is less than or equal to the second threshold.

5. The method according to any one of claims 1 to 4, wherein the frequency-domain information comprises at least one of: a frequency component, a spectral coefficient on a frequency component, a normalized value of a spectral coefficient, or an approximate value of a spectral coefficient.

6. The method according to claim 1, wherein

the spectral information is acquired based on M channels in a path, wherein M is a positive integer;
the spectral information is acquired based on M channels in each of N paths, wherein M is a positive integer, and N is an integer greater than 1; or
the spectral information is acquired based on M channels in N paths, wherein M is a positive integer, and N is an integer greater than 1.

7. The method according to claim 6, wherein M channels are in one-to-one correspondence with M time instants.

8. The method according to claim 7, wherein the spectral information is acquired based on M channels in each of N paths, wherein

in a case where a number X of channels measured in a first time instant in the M time instants is less than N, (N-X) channels in N channels corresponding to the first time instant are default values, wherein X is a positive integer; or
in a case where a number X of channels measured in a first time instant in the M time instants is greater than N, N channels corresponding to the first time instant are N channels selected from X channels.

9. The method according to claim 8, wherein in a case where the number X of channels is greater than N, the N channels are at least one type of: channels corresponding to N paths with a strongest energy in the X channels, or channels corresponding to N paths with a shortest delay in the X channels.

10. The method according to claim 6, wherein the spectral information is acquired by separately processing each of the N paths, or by jointly processing different paths of the N paths.

11. The method according to any one of claims 6 to 10, wherein M is specific to a sensing task, sensing receiver nodes, or sensing transmitter nodes, wherein the first node is one of the sensing receiver nodes, and the sensing transmitter nodes are the same or different from the sensing receiver nodes.

12. The method according to any one of claims 6 to 11, wherein M is defined by a communication protocol, determined based on configuration information, or determined based on a sensing service.

13. The method according to claim 12, wherein

M is determined based on first configuration information, wherein the first configuration information is used to configure a spectral information analysis window of the spectral information;
M is determined based on second configuration information, wherein the second configuration information is used to configure a transmission time of a sensing signal, wherein the sensing signal is an initial signal corresponding to the received signal; or
M is determined based on first configuration information and second configuration information.

14. The method according to claim 13, wherein the first configuration information comprises at least one of: a start time of the spectral information analysis window, a duration of the spectral information analysis window, an end time of the spectral information analysis window, a period of the spectral information analysis window, or a time interval between adjacent time instants in M time instants.

15. The method according to claim 13, wherein the second configuration information comprises at least one of: a start time for transmission of the sensing signal, a duration for transmission of the sensing signal, an end time for transmission of the sensing signal, or a period or time interval for transmission of the sensing signal.

16. The method according to any one of claims 6 to 15, wherein a time duration corresponding to M is greater than or equal to a motion period of a sensing target, and/or a time duration corresponding to M is greater than or equal to a channel change period of a sensing target.

17. The method according to any one of claims 1 to 16, wherein in a case where at least two of sensing targets are present, the spectral information of the at least two of sensing targets is reported based on an order of first parameters, wherein each of the first parameters comprises at least one of: an intensity of the received signal, a delay of the received signal, or a geographic location grid corresponding to the received signal.

18. The method according to any one of claims 1 to 17, further comprising:
reporting a validity or reliability of the spectral information.

19. The method according to claim 18, wherein the validity or reliability is represented by at least one of: a signal-to-interference-plus-noise ratio (SINR), a reliability probability, or a line-of-sight (LOS) probability.

20. The method according to any one of claims 1 to 19, wherein the spectral information is determined based on a report constraint, wherein the report constraint comprises at least one of: a valid range for the spectral information, a decision threshold for the spectral information, or a reported amount of the spectral information.

21. The method according to any one of claims 1 to 20, further comprising:
acquiring the channel by measuring the received signal.

22. The method according to any one of claims 1 to 21, further comprising:
receiving configuration information of a sensing signal, wherein the sensing signal is an initial signal corresponding to the received signal, and the configuration information of the sensing signal comprises at least one of: time-domain information of the sensing signal, frequency-domain information of the sensing signal, or sequence information of the sensing signal.

23. The method according to any one of claims 1 to 22, wherein the channel comprises at least one type of: a line-of-sight (LOS) channel, a specified path channel, or an N-path channel, wherein N is a positive integer.

24. A method for information feedback, performed by a second node, the method comprising:
receiving spectral information, wherein the spectral information is frequency-domain information of a received signal or channel.

25. The method according to claim 24, further comprising:
receiving a validity or reliability of the spectral information.

26. The method according to claim 24 or 25, further comprising:
transmitting configuration information of a sensing signal, wherein the sensing signal is an initial signal corresponding to the received signal, and the configuration information of the sensing signal comprises at least one of: time-domain information of the sensing signal, frequency-domain information of the sensing signal, or sequence information of the sensing signal.

27. A method for information analysis, performed by a second node, the method comprising:

acquiring sensing information; and
acquiring spectral information by performing spectral analysis on the sensing information, wherein the spectral information comprises frequency-domain information of a received signal or channel.

28. The method according to claim 26, further comprising:
determining a validity or reliability of the spectral information.

29. The method according to claim 24 or 25, further comprising:

transmitting configuration information of a sensing signal, wherein the sensing signal is an initial signal corresponding to the received signal, and the configuration information of the sensing signal comprises at least one of: time-domain information of the sensing signal, frequency-domain information of the sensing signal, or sequence information of the sensing signal.

30. A method for information analysis, performed by a first node, the method comprising:
transmitting sensing information, wherein the sensing information is used to acquire spectral information, wherein the spectral information comprises frequency-domain information of a received signal or channel.

31. The method according to claim 24 or 25, further comprising:
receiving configuration information of a sensing signal, wherein the sensing signal is an initial signal corresponding to the received signal, and the configuration information of the sensing signal comprises at least one of: time-domain information of the sensing signal, frequency-domain information of the sensing signal, or sequence information of the sensing signal.

32. An apparatus for information feedback, comprising:
a first transmitting module, configured to transmit spectral information, wherein the spectral information is frequency-domain information of a received signal or channel.

33. An apparatus for information feedback, comprising:
a second receiving module, configured to receive spectral information, wherein the spectral information is frequency-domain information of a received signal or channel.

34. An apparatus for information analysis, comprising:

a third receiving module, configured to acquire sensing information; and
a processing module, configured to acquire spectral information by performing spectral analysis on the sensing information, wherein the spectral information comprises frequency-domain information of a received signal or channel.

35. An apparatus for information analysis, comprising:
a fourth transmitting module, configured to transmit sensing information, wherein the sensing information is used to acquire spectral information, wherein the spectral information comprises frequency-domain information of a received signal or channel.

36. A sensing device, comprising: a transceiver, wherein the transceiver is configured to transmit spectral information, wherein the spectral information is frequency-domain information of a received signal or channel.

37. A sensing device, comprising: a transceiver, wherein the transceiver is configured to receive spectral information, wherein the spectral information is frequency-domain information of a received signal or channel.

38. A sensing device, comprising: a transceiver and a processor, wherein the transceiver is configured to acquire sensing information; and the processor is configured to acquire spectral information by performing spectral analysis on the sensing information, wherein the spectral information comprises frequency-domain information of a received signal or channel.

39. A sensing device, comprising: a transceiver, wherein the transceiver is configured to transmit sensing information, wherein the sensing information is used to acquire spectral information, wherein the spectral information comprises frequency-domain information of a received signal or channel.

40. A computer-readable storage medium, storing one or more computer programs, wherein the one or more computer programs, when loaded and run by a processor, cause a sensing device to perform the method for information feedback as defined in any one of claims 1 to 26, or the method for information analysis as defined in any one of claims 27 to 31.

41. A chip, comprising: programmable logic circuitry and/or one or more program instructions, wherein the chip, when running, is caused to perform the method for information feedback as defined in any one of claims 1 to 26, or the method for information analysis as defined in any one of claims 27 to 31.

42. A computer program product, comprising: one or more computer instructions stored in a computer-readable storage medium, and the one or more computer instructions, when read from the computer-readable storage medium and executed by a processor, cause a sensing device to perform the method for information feedback as defined in any one of claims 1 to 26, or the method for information analysis as defined in any one of claims 27 to 31.

43. A computer program, comprising: one or more computer instructions stored in a computer-readable storage medium, and the one or more computer instructions, when read from the computer-readable storage medium and executed by a processor, cause a sensing device to perform the method for information feedback as defined in any one of claims 1 to 26, or the method for information analysis as defined in any one of claims 27 to 31.

Mode 1:

Sensing signal

Reflected signal

Sensing transmitter/
receiver base station

Sensing target

Mode 2:

Sensing signal

Reflected signal

Sensing transmitter/
receiver terminal

Sensing target

Mode 3

Sensing
signal

Reflected
signal

Sensing transmitter
base station

Sensing
target

Sensing receiver
base station

Mode 4:

Sensing
signal

Reflected
signal

Sensing transmitter
terminal

Sensing
target

Sensing receiver
terminal

Mode 5:

Sensing
signal

Reflected
signal

Sensing transmitter
base station

Sensing
target

Sensing receiver
terminal

Mode 6:

Sensing
signal

Reflected
signal

Sensing transmitter
terminal

Sensing
target

Sensing receiver
base station

Mode 7

Sensing signal

Sensing transmitter
terminal

Sensing receiver
base station

Mode 8:

Sensing signal

Sensing feedback

Sensing transmitter
base station

Sensing receiver
terminal

FIG. 1

Time-domain channel estimation    SNR=20dB

Phase

Time (slot)

(1)

Time-domain channel estimation    SNR=10dB

Phase

Time (slot)

(2)

FIG. 2

SNR=20dB

Spectral coefficient

X: 0
Y: 0.1441

X: 0.2
Y: 0.1064

Frequency

(1)

SNR=10dB

Spectral coefficient

X: 0.2
Y: 0.1257

Frequency

(2)

FIG. 3

Measured target at a distance of 25 m

Receive power

Time (slot)

(1)

Measured target at a distance of 5 m

Receive power

Time (slot)

(2)

FIG. 4

FIG. 5

FIG. 6

FIG. 7

FIG. 8

FIG. 9

Sensing processor node ⌐10

FIG. 10

Transmitting spectral information, wherein the spectral information is frequency-domain information of a received signal or channel ⌐210

FIG. 11

Receiving spectral information, wherein the spectral information is frequency-domain information of a received signal or channel ⌐220

FIG. 12

First node | Second node

301,Configuration information

302,Performing a sensing process

303,Spectral information

FIG. 13

410

Acquiring sensing information

420

Acquiring spectral information by performing spectral analysis on the sensing information, wherein the spectral information includes frequency-domain information of a received signal or channel

FIG. 14

430

Transmitting sensing information, wherein the sensing information is used to acquire spectral information, wherein the spectral information includes frequency-domain information of a received signal or channel

FIG. 15

First node

Second node

501,Configuration information

502,Performing a sensing process

503,Sensing information (received signal or channel)

504,Acquiring spectral information by performing spectral analysis

FIG. 16

601

First receiving module

602

First transmitting module

FIG. 17

603

Second receiving module

604

Second transmitting module

FIG. 18

605

Third receiving module

606

Processing module

607

Third transmitting module

FIG. 19

608

Fourth receiving module

609

Fourth transmitting module

FIG. 20

Processor 801

Memory 804

805

Bus

Transceiver

Receiver 802

806

Transmitter 803

FIG. 21

## INTERNATIONAL SEARCH REPORT

| International application No. |
|---|
| **PCT/CN2023/107097** |

| A. | CLASSIFICATION OF SUBJECT MATTER |
|---|---|

G01S 13/02(2006.01)i

According to International Patent Classification (IPC) or to both national classification and IPC

| B. | FIELDS SEARCHED |
|---|---|

Minimum documentation searched (classification system followed by classification symbols)

IPC: G01S

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; IEEE: 节点, 感知, 谱信息, 频率域, 频域, 分析, 信道, 径, 配置, 窗口, 排序, 选择, sensing, spectrum?, frequency, field?, analys+, channel?, window?, range, restrict+, select

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 116055015 A (VIVO SOFTWARE TECHNOLOGY CO., LTD.) 02 May 2023 (2023-05-02) description, paragraphs 3-553, and figures 1-11 | 1-43 |
| A | CN 116156605 A (VIVO SOFTWARE TECHNOLOGY CO., LTD.) 23 May 2023 (2023-05-23) entire document | 1-43 |
| A | CN 115811737 A (VIVO MOBILE COMMUNICATION CO., LTD.) 17 March 2023 (2023-03-17) entire document | 1-43 |
| A | WO 2015066429 A1 (INTERDIGITAL PATENT HOLDINGS, INC.) 07 May 2015 (2015-05-07) entire document | 1-43 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 December 2023** | **11 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/107097** |

| Patent document cited in search report | | | Publication date (day/month/year) | Patent family member(s) | Publication date (day/month/year) |
| --- | --- | --- | --- | --- | --- |
| CN | 116055015 | A | 02 May 2023 | None | |
| CN | 116156605 | A | 23 May 2023 | None | |
| CN | 115811737 | A | 17 March 2023 | None | |
| WO | 2015066429 | A1 | 07 May 2015 | None | |

Form PCT/ISA/210 (patent family annex) (July 2022)